# EUROPEAN PATENT APPLICATION

(11) **EP 4 586 653 A1**
(43) Date of publication of application: **16.07.2025**
(21) Application number: 23884789.1
(22) Date of filing: 28.10.2023
(51) Int. Cl.: H04W 4/021

(54) **POSITIONING METHOD AND RELATED APPARATUS**

(30) Priority: 31.10.2022 CN 202211366276
(71) Applicant: Huawei Technologies Co., Ltd., Shenzhen, Guangdong 518129 (CN)
(72) Inventor: WU, Mouyan, Shenzhen, Guangdong 518129 (CN); JIN, Le, Shenzhen, Guangdong 518129 (CN); HUANG, Guosheng, Shenzhen, Guangdong 518129 (CN); ZHU, Yuhong, Shenzhen, Guangdong 518129 (CN); XIAO, Yang, Shenzhen, Guangdong 518129 (CN); SHI, Xiang, Shenzhen, Guangdong 518129 (CN); LI, Wenyi, Shenzhen, Guangdong 518129 (CN)
(74) Representative: Goddar, Heinz J.
(86) International application number: PCT/CN2023/127413
(87) International publication number: WO 2024/093857

(57) **Abstract**

This application discloses a positioning method and a related apparatus, so that geo-fences can be configured for a plurality of indoor regions (for example, a garage, a tunnel, and a cave). When a navigation and positioning module on an electronic device is not started, if the electronic device detects that the electronic device enters a geo-fence of a specified indoor region and the electronic device is in an in-vehicle state, the electronic device may enable navigation and positioning to initiate continuous positioning. When parking is detected, the electronic device obtains a parking location. In this way, the electronic device can automatically enable navigation and positioning when identifying that the electronic device is to enter a geo-fence of an indoor region, to obtain a real-time location of the electronic device entering the indoor region.

## Description

This application claims priority to Chinese Patent Application No. 202211366276.2, filed with the China National Intellectual Property Administration on October 31, 2022 and entitled "POSITIONING METHOD AND RELATED APPARATUS", which is incorporated herein by reference in its entirety.

### TECHNICAL FIELD

This application relates to the field of positioning technologies, and in particular, to a positioning method and a related apparatus.

### BACKGROUND

In electronic devices represented by smartphones, a location based service (location based service, LBS) has become an essential basic service on the electronic devices.

Currently, users have an increasingly urgent requirement for indoor positioning, for example, vehicle positioning in a garage and positioning in a tunnel. In particular, in places such as large shopping malls, airports, and railway stations, garages have large areas, large quantities of parking spaces, and complex routes. Therefore, users have a stronger requirement for finding vehicles in the garages through indoor positioning. In an indoor environment, a global navigation satellite system (global navigation satellite system, GNSS) module on an electronic device usually cannot receive a satellite signal, and cannot perform positioning based on the satellite signal. Therefore, indoor positioning needs to be implemented by using hardware such as an inertial measurement unit (inertial measurement unit, IMU) and a software module like a navigation module on the electronic device. In this case, a user needs to actively start a navigation application on the electronic device when entering the indoor environment. After the navigation application is started, the navigation application starts the navigation module and the hardware like the IMU on the electronic device, to continuously initiate continuous positioning.

However, when the user forgets to start the navigation application on the electronic device in advance, the electronic device cannot obtain a location of the user indoors.

### SUMMARY

This application provides a positioning method and a related apparatus, so that an electronic device can automatically enable navigation and positioning when identifying that the electronic device is to enter a geo-fence of an indoor region, to obtain a real-time location of the electronic device entering the indoor region.

According to a first aspect, this application provides a positioning method, applied to an electronic device. The electronic device includes an inertial measurement unit IMU and a global navigation satellite system GNSS module. The IMU is configured to detect IMU data of the electronic device, and the GNSS module is configured to obtain GNSS data when the GNSS module is started. The method includes: The GNSS module is in an off state. When the electronic device detects that the electronic device is in an in-vehicle state and the electronic device enters a geo-fence of a garage, the electronic device starts the GNSS module, and obtains the GNSS data through the GNSS module. The electronic device determines a real-time location of the electronic device based on the GNSS data and the IMU data. When the electronic device detects that a vehicle is parked, the electronic device determines, as a parking location, a first location determined based on the GNSS data and the IMU data. The electronic device displays the parking location.

According to the positioning method provided in this application, when the GNSS module on the electronic device is not started, if the electronic device detects that the electronic device enters a geo-fence of a specified indoor region and the electronic device is in the in-vehicle state, the electronic device may start the GNSS module, and initiate continuous navigation and positioning based on the GNSS data obtained through the GNSS module and the IMU data. When parking is detected, the electronic device obtains the parking location. In this way, even if a user does not start the GNSS module on the electronic device in advance, the electronic device may continuously obtain a real-time location of the user, for example, a parking location, after entering the indoor region.

In a possible implementation, that the electronic device detects that the electronic device is in an in-vehicle state specifically includes: If the electronic device detects that the IMU data meets a first preset condition, the electronic device determines that the electronic device is in the in-vehicle state.

The first preset condition includes that a moving speed of the electronic device is between a first preset speed and a second preset speed and/or a moving acceleration of the electronic device is greater than a preset acceleration, where the first preset speed is less than the second preset speed.

In this way, because the IMU on the electronic device is generally in an on state for a long time, the electronic device may determine, based on the IMU data measured by the IMU, whether the electronic device is in the in-vehicle state. This fully utilizes the IMU.

In a possible implementation, that the electronic device detects that the electronic device is in an in-vehicle state specifically includes: If the electronic device detects that a Bluetooth connection to the vehicle is established, the electronic device determines that the electronic device is in the in-vehicle state.

In this way, the electronic device can accurately identify that the electronic device is in the in-vehicle state.

In a possible implementation, that the electronic device detects that a vehicle is parked specifically includes: If the electronic device detects that the IMU data meets a second preset condition, the electronic device determines that the vehicle is parked.

The second preset condition includes that a moving speed of the electronic device is 0.

In this way, because the IMU on the electronic device is generally in the on state for a long time, the electronic device may determine, based on the IMU data measured by the IMU, whether the vehicle is parked. This fully utilizes the IMU.

In a possible implementation, that the electronic device detects that a vehicle is parked specifically includes: If the electronic device detects that the Bluetooth connection to the vehicle is disconnected, the electronic device determines that the vehicle is parked.

In this way, the electronic device can accurately identify that the electronic device is parked.

In a possible implementation, that the electronic device detects that the electronic device enters a geo-fence of a garage specifically includes: If the electronic device detects that cellular cell information of the location of the electronic device matches cellular cell information in geo-fence data of the garage, and/or the electronic device detects that Wi-Fi data of the location of the electronic device matches Wi-Fi data in the geo-fence data of the garage, the electronic device determines that the electronic device enters the geo-fence of the garage. The Wi-Fi data includes one or more of the following: a MAC address, an IP address, and Wi-Fi signal strength that are of a Wi-Fi access point that sends a Wi-Fi signal.

In this way, because a cellular module and/or the Wi-Fi module of the electronic device are/is generally in an on state for a long time, whether the electronic device enters the geo-fence of the garage is determined based on the cellular cell information obtained through the cellular module and/or the Wi-Fi data obtained through the Wi-Fi module, so that power consumption of the electronic device can be reduced.

In a possible implementation, before the electronic device detects that the electronic device enters the geo-fence of the garage, the method further includes: The electronic device determines, from a geo-fence database based on the cellular cell information and/or Wi-Fi data detected by the electronic device, one or more pieces of geo-fence data in a target activity region in which the electronic device is located. The electronic device determines, based on the one or more pieces of geo-fence data in the target activity region and the cellular cell information and/or Wi-Fi data detected by the electronic device, whether the electronic device enters the geo-fence of the garage.

In this way, because there is a large quantity of geo-fence data, the geo-fence data may be stored by region. The electronic device may first detect, from the geo-fence database, the one or more pieces of geo-fence data corresponding to the target activity region in which the electronic device is located, and then detect whether the electronic device enters the geo-fence of the garage. This can reduce a data calculation amount, and also reduce a data storage amount in an arithmetic component.

In a possible implementation, that the electronic device determines a real-time location of the electronic device based on the GNSS data and the IMU data specifically includes: When the electronic device obtains the GNSS data at a first moment through the GNSS module, the electronic device obtains a location of the electronic device at the first moment through resolving based on the GNSS data. When the electronic device does not obtain the GNSS data at a second moment through the GNSS module, the electronic device determines displacement information of the electronic device from the first moment to the second moment based on the IMU data. The electronic device determines a location of the electronic device at the second moment based on the location of the electronic device at the first moment and the displacement information from the first moment to the second moment.

In this way, in an indoor region like a garage, when a GNSS signal is weak and GNSS data cannot be obtained, a real-time location of the electronic device in the indoor region may also be continuously obtained, and a parking location may be obtained.

According to a second aspect, this application provides an electronic device, including an IMU, a GNSS module, a processor, and a display. The IMU is configured to: detect IMU data of the electronic device, where the IMU data includes gyroscope data and acceleration data; and send the IMU data to the processor. The GNSS module is in an off state. The processor is configured to start the GNSS module when it is detected that the electronic device is in an in-vehicle state and the electronic device enters a geo-fence of a garage. The GNSS module is configured to: obtain the GNSS data when the GNSS module is started, and send the GNSS data to the processor. The processor is configured to determine a real-time location of the electronic device based on the GNSS data and the IMU data. The processor is further configured to: when parking is detected, determine, as a parking location, a first location determined based on the GNSS data and the IMU. The processor is further configured to indicate the display to display the parking location.

In a possible implementation, if the IMU data meets a first preset condition, the electronic device is in the in-vehicle state.

The first preset condition includes that a moving speed of the electronic device is between a first preset speed and a second preset speed and/or a moving acceleration of the electronic device is greater than a preset acceleration, where the first preset speed is less than the second preset speed.

In a possible implementation, the electronic device further includes a sensor hub sensor hub module. The sensor hub module is configured to: obtain the IMU data from the IMU, and when the IMU data meets the first preset condition, determine that the electronic device is in the in-vehicle state. The sensor hub module is further configured to notify the processor that the electronic device is in the in-vehicle state.

In a possible implementation, the processor is further configured to determine that the electronic device is in the in-vehicle state when it is detected that a Bluetooth connection to the vehicle is established.

In a possible implementation, if the IMU data meets a second preset condition, the electronic device determines that the vehicle is parked.

The second preset condition includes that a moving speed of the electronic device is 0.

In a possible implementation, the electronic device further includes a sensor hub module. The sensor hub module is configured to: obtain the IMU data from the IMU, and when the IMU data meets the second preset condition, determine that the vehicle is parked. The sensor hub module is further configured to notify the processor that the vehicle is parked.

In a possible implementation, the processor is further configured to: when it is detected that the Bluetooth connection to the vehicle is disconnected, determine, by the electronic device, that the vehicle is parked.

In a possible implementation, the electronic device further includes a cellular module and/or a Wi-Fi module. The cellular module is configured to detect cellular cell information of the location of the electronic device, and the Wi-Fi module is configured to detect Wi-Fi data of the location of the electronic device. If the cellular module detects that the cellular cell information of the location of the electronic device matches cellular cell information in geo-fence data of the garage, and/or the Wi-Fi module detects that the Wi-Fi data of the location of the electronic device matches Wi-Fi data in the geo-fence data of the garage, the electronic device determines that the electronic device enters the geo-fence of the garage. The Wi-Fi data includes one or more of the following: a MAC address, an IP address, and Wi-Fi signal strength that are of a Wi-Fi access point that sends a Wi-Fi signal.

In a possible implementation, the electronic device further includes the sensor hub module. The cellular module is further configured to send the cellular cell information of the location of the electronic device to the sensor hub module. The Wi-Fi module is further configured to send the Wi-Fi data of the location of the electronic device to the sensor hub module. The sensor hub module is further configured to determine, based on the cellular cell information of the location of the electronic device and/or the Wi-Fi data of the Wi-Fi module, whether the electronic device enters the geo-fence of the garage. The sensor hub module is further configured to notify the processor whether the electronic device enters the geo-fence of the garage.

In a possible implementation, the processor is further configured to determine, from a geo-fence database based on the cellular cell information and/or Wi-Fi data detected by the electronic device, one or more pieces of geo-fence data in a target activity region in which the electronic device is located. The processor is further configured to send the one or more pieces of geo-fence data in the target activity region in which the electronic device is located to the sensor hub module. The sensor hub module is specifically configured to determine, based on the one or more pieces of geo-fence data in the target activity region and the cellular cell information and/or Wi-Fi data detected by the electronic device, whether the electronic device enters the geo-fence of the garage.

In a possible implementation, the determining a real-time location of the electronic device based on the GNSS data and the IMU data specifically includes: when the GNSS data sent by the GNSS module is obtained at a first moment, obtaining a location of the electronic device at the first moment through resolving based on the GNSS data; when the GNSS data sent by the GNSS module is not obtained at a second moment, determining displacement information of the electronic device from the first moment to the second moment based on the IMU data; and determining a location of the electronic device at the second moment based on the location of the electronic device at the first moment and the displacement information from the first moment to the second moment.

According to a third aspect, this application provides an electronic device, including an IMU, a GNSS module, a display, one or more processors, and one or more memories. The one or more memories are coupled to the one or more processors. The one or more memories are configured to store computer program code, and the computer program code includes computer instructions. When the one or more processors execute the computer instructions, the electronic device is enabled to perform the positioning method according to any possible implementation of any one of the foregoing aspects.

According to a fourth aspect, an embodiment of this application provides a computer storage medium, including computer instructions. When the computer instructions are run on an electronic device, the electronic device is enabled to perform the positioning method according to any possible implementation of any one of the foregoing aspects.

According to a fifth aspect, an embodiment of this application provides a computer program product. When the computer program product runs on a computer, the computer is enabled to perform the positioning method according to any possible implementation of any one of the foregoing aspects.

For beneficial effect of the second aspect to the fifth aspect, refer to the first aspect and any possible implementation of the first aspect. Details are not described herein again.

### BRIEF DESCRIPTION OF DRAWINGS

FIG. 1 is a diagram of a structure of an electronic device according to an embodiment of this application;
FIG. 2 is a diagram of a positioning scenario according to an embodiment of this application;
FIG. 3 is a diagram of another positioning scenario according to an embodiment of this application;
FIG. 4 is a diagram of a principle of a positioning method according to an embodiment of this application;
FIG. 5 is a diagram of a geo-fence division principle according to an embodiment of this application;
FIG. 6 is a diagram of a module component of an electronic device according to an embodiment of this application;
FIG. 7 is a diagram of a module component of another electronic device according to an embodiment of this application;
FIG. 8 is a schematic flowchart of a positioning method according to an embodiment of this application; and
FIG. 9A and FIG. 9B are diagrams of a group of interfaces for displaying a parking location according to an embodiment of this application.

### DESCRIPTION OF EMBODIMENTS

The technical solutions according to embodiments of this application are clearly and completely described in the following with reference to the accompanying drawings. In the descriptions of embodiments of this application, unless otherwise stated, "/" represents "or". For example, A/B may represent A or B. In this specification, "and/or" merely describes an association relationship between associated objects and represents that three relationships may exist. For example, A and/or B may represent the following three cases: Only A exists, both A and B exist, and only B exists. In addition, in the descriptions of embodiments of this application, "a plurality of" means two or more than two.

The following terms "first" and "second" are merely intended for a purpose of description, and shall not be understood as implying or implying relative importance or implicitly indicating a quantity of indicated technical features. Therefore, a feature limited by "first" or "second" may explicitly or implicitly include one or more of the features. In the descriptions of embodiments of this application, unless otherwise specified, "a plurality of" means two or more.

The following describes an implementation of searching for a vehicle in a garage provided in embodiments of this application.

Users have an increasingly urgent requirement for indoor positioning, for example, vehicle positioning in a garage and positioning in a tunnel. In particular, in places such as large shopping malls, airports, and railway stations, garages have large areas, large quantities of parking spaces, and complex routes. Therefore, users have a stronger requirement for finding vehicles in the garages through indoor positioning.

Manner 1: A dedicated parking detection device or component (for example, a camera or a sensor) may be deployed in a garage to implement vehicle positioning in the garage. The parking detection device or component may detect a parking location of a vehicle in the garage, and send the parking location of the vehicle to an application matching the parking detection device. A user may view the parking location of the vehicle on the application. However, to implement vehicle positioning in a garage in this manner, a related hardware device or component needs to be deployed in the garage, and a user needs to download a corresponding application on an electronic device like a mobile phone. Consequently, deployment costs and maintenance costs are high, and large-scale promotion is difficult.

Manner 2: A navigation device like a mobile phone may perform autonomous navigation and positioning through an IMU sensor, a GNSS module, a camera, and the like, to obtain a parking location in a garage. However, in this manner, a user needs to manually start a navigation application before entering the garage, and start a navigation and positioning module through the navigation application to perform navigation and positioning. After a navigation device like a mobile phone enters the garage, because a GNSS module usually cannot receive a satellite signal, positioning cannot be performed based on the satellite signal. Therefore, dead reckoning may be completed through components such as an IMU sensor and/or a camera, to implement positioning. If the user does not start the navigation and positioning module in advance through the navigation application, the navigation device like the mobile phone usually cannot obtain a parking location when the user performs parking. If the navigation and positioning module is always started, power consumption of the navigation device like the mobile phone is high.

Therefore, an embodiment of this application provides a positioning method, to configure a geo-fence for a plurality of indoor regions (for example, a garage, a tunnel, or a cave). When a navigation and positioning module on an electronic device is not started, if the electronic device detects that the electronic device enters a geo-fence of a specified indoor region and the electronic device is in an in-vehicle state, the electronic device may start the navigation and positioning module, and initiate continuous positioning. When parking is detected, the electronic device obtains a parking location. The navigation and positioning module includes a GNSS positioning module and a vehicle dead reckoning (vehicle dead reckoning, VDR) positioning module/a dead reckoning (dead reckoning, DR) positioning module. In this way, the electronic device can automatically start the navigation and positioning module when identifying that the electronic device is to enter an indoor region, to obtain a real-time location of the electronic device entering the indoor region.

In embodiments of this application, the indoor region is not limited to a type of region like a garage, a tunnel, or a cave, and may further be another type of indoor region. For ease of description, in embodiments of this application, an example in which the indoor region is a garage is used for description.

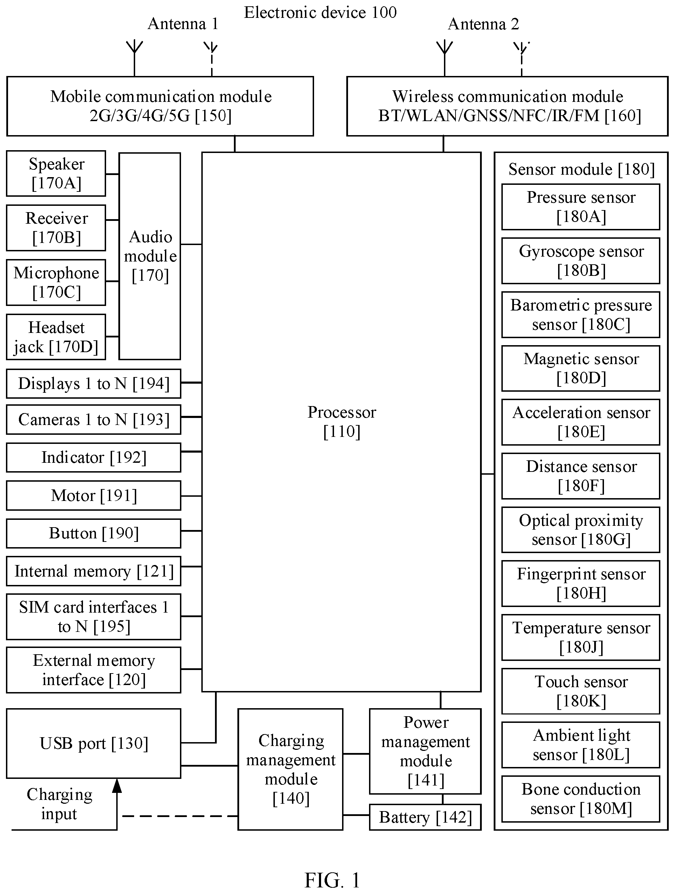

FIG. 1 is a diagram of a structure of an electronic device 100;
The electronic device 100 is used as an example below to describe embodiments in detail. It should be understood that the electronic device 100 shown in FIG. 1 is merely an example, and the electronic device 100 may have more or fewer components than those shown in FIG. 1, or may combine two or more components, or may have different component configurations. Components shown in the figure may be implemented by hardware that includes one or more signal processing and/or application-specific integrated circuits, software, or a combination of hardware and software.

The electronic device 100 may include a processor 110, an external memory interface 120, an internal memory 121, a universal serial bus (universal serial bus, USB) port 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identity module (subscriber identity module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It may be understood that the structure shown in this embodiment of the present invention does not constitute a specific limitation on the electronic device 100. In some other embodiments of this application, the electronic device 100 may include more or fewer components than those shown in the figure, or some components may be combined, or some components may be split, or different component arrangements may be used. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, a neural-network processing unit (neural-network processing unit, NPU), and/or the like. Different processing units may be independent devices, or may be integrated into one or more processors.

The controller may be a nerve center and a command center of the electronic device 100. The controller may generate an operation control signal based on an instruction operation code and a time sequence signal, to complete control of instruction reading and instruction execution.

A memory may be further disposed in the processor 110, and is configured to store instructions and data. In some embodiments, the memory in the processor 110 is a cache memory. The memory may store instructions or data just used or cyclically used by the processor 110. If the processor 110 needs to use the instructions or the data again, the processor may directly invoke the instructions or the data from the memory. This avoids repeated access, reduces waiting time of the processor 110, and improves system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) port, and/or the like.

The I2C interface is a two-way synchronous serial bus, including a serial data line (serial data line, SDA) and a serial clock line (serial clock line, SCL). In some embodiments, the processor 110 may include a plurality of groups of I2C buses. The processor 110 may be separately coupled to the touch sensor 180K, a charger, a flash, the camera 193, and the like through different I2C bus interfaces. For example, the processor 110 may be coupled to the touch sensor 180K through the I2C interface, so that the processor 110 communicates with the touch sensor 180K through the I2C bus interface, to implement a touch function of the electronic device 100.

The I2S interface may be configured to perform audio communication. In some embodiments, the processor 110 may include a plurality of groups of I2S buses. The processor 110 may be coupled to the audio module 170 through the I2S bus, to implement communication between the processor 110 and the audio module 170. In some embodiments, the audio module 170 may transmit an audio signal to the wireless communication module 160 through the I2S interface, to implement a function of answering a call through a Bluetooth headset.

The PCM interface may also be configured to perform audio communication, and sample, quantize, and code an analog signal. In some embodiments, the audio module 170 may be coupled to the wireless communication module 160 through a PCM bus interface. In some embodiments, the audio module 170 may also transmit an audio signal to the wireless communication module 160 through the PCM interface, to implement a function of answering a call through a Bluetooth headset. Both the I2S interface and the PCM interface may be used for audio communication.

The UART interface is a universal serial data bus, and is used to perform asynchronous communication. The bus may be a two-way communication bus. The bus converts to-be-transmitted data between serial communication and parallel communication. In some embodiments, the UART interface is usually used to connect the processor 110 to the wireless communication module 160. For example, the processor 110 communicates with a Bluetooth module in the wireless communication module 160 through the UART interface, to implement a Bluetooth function. In some embodiments, the audio module 170 may transmit an audio signal to the wireless communication module 160 through the UART interface, to implement a function of playing music through a Bluetooth headset.

The MIPI interface may be configured to connect the processor 110 to a peripheral component such as the display 194 or the camera 193. The MIPI interface includes a camera serial interface (camera serial interface, CSI), a display serial interface (display serial interface, DSI), and the like. In some embodiments, the processor 110 communicates with the camera 193 through the CSI interface, to implement an image shooting function of the electronic device 100. The processor 110 communicates with the display 194 through the DSI interface, to implement a display function of the electronic device 100.

The GPIO interface may be configured by software. The GPIO interface may be configured as a control signal or a data signal. In some embodiments, the GPIO interface may be configured to connect the processor 110 to the camera 193, the display 194, the wireless communication module 160, the audio module 170, the sensor module 180, or the like. The GPIO interface may alternatively be configured as an I2C interface, an I2S interface, a UART interface, an MIPI interface, or the like.

The USB port 130 is an interface that conforms to a USB standard specification, and may be specifically a mini USB port, a micro USB port, a USB type-C port, or the like. The USB port 130 may be configured to connect to the charger to charge the electronic device 100, or may be configured to transmit data between the electronic device 100 and a peripheral device, or may be configured to connect to a headset for playing audio through the headset. The port may be further configured to connect to another electronic device like an augmented reality device.

It may be understood that an interface connection relationship between the modules that is shown in embodiments of the present invention is merely an example for description, and does not constitute a limitation on the structure of the electronic device 100. In some other embodiments of this application, the electronic device 100 may alternatively use an interface connection manner different from that in the foregoing embodiment, or use a combination of a plurality of interface connection manners.

The charging management module 140 is configured to receive a charging input from the charger. The charger may be a wireless charger or a wired charger. In some embodiments of wired charging, the charging management module 140 may receive a charging input of a wired charger through the USB port 130. In some embodiments of wireless charging, the charging management module 140 may receive a wireless charging input through a wireless charging coil of the electronic device 100. The charging management module 140 supplies power to the electronic device through the power management module 141 while charging the battery 142.

The power management module 141 is configured to connect to the battery 142, the charging management module 140, and the processor 110. The power management module 141 receives an input from the battery 142 and/or the charging management module 140, and supplies power to the processor 110, the internal memory 121, an external memory, the display 194, the camera 193, the wireless communication module 160, and the like. The power management module 141 may be further configured to monitor parameters such as a battery capacity, a battery cycle count, and a state of health (electric leakage or impedance). In some other embodiments, the power management module 141 may alternatively be disposed in the processor 110. In some other embodiments, the power management module 141 and the charging management module 140 may alternatively be disposed in a same device.

A wireless communication function of the electronic device 100 may be implemented through the antenna 1, the antenna 2, the mobile communication module 150, the wireless communication module 160, the modem processor, the baseband processor, and the like.

The antenna 1 and the antenna 2 are configured to transmit and receive an electromagnetic wave signal. Each antenna in the electronic device 100 may be configured to cover one or more communication frequency bands. Different antennas may be further multiplexed, to improve antenna utilization. For example, the antenna 1 may be multiplexed as a diversity antenna of a wireless local area network. In some other embodiments, the antenna may be used in combination with a tuning switch.

The mobile communication module 150 may provide a wireless communication solution that includes 2G/3G/4G/5G or the like and that is applied to the electronic device 100. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering or amplification on the received electromagnetic wave, and transmit the electromagnetic wave to the modem processor for demodulation. The mobile communication module 150 may further amplify a signal modulated by the modem processor, and convert the signal into an electromagnetic wave for radiation through the antenna 1. In some embodiments, at least some function modules in the mobile communication module 150 may be disposed in the processor 110. In some embodiments, at least some function modules of the mobile communication module 150 may be disposed in a same device as at least some modules of the processor 110.

The modem processor may include a modulator and a demodulator. The modulator is configured to modulate a to-be-sent low-frequency baseband signal into a medium-high frequency signal. The demodulator is configured to demodulate a received electromagnetic wave signal into a low-frequency baseband signal. Then, the demodulator transmits the low-frequency baseband signal obtained through demodulation to the baseband processor for processing. The low-frequency baseband signal is processed by the baseband processor and then transmitted to the application processor. The application processor outputs a sound signal through an audio device (which is not limited to the speaker 170A, the receiver 170B, or the like), or displays an image or a video through the display 194. In some embodiments, the modem processor may be an independent device. In some other embodiments, the modem processor may be independent of the processor 110, and is disposed in a same device as the mobile communication module 150 or another function module.

The wireless communication module 160 may provide a wireless communication solution that is applied to the electronic device 100 and that includes a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, or the like. The wireless communication module 160 may be one or more components integrating at least one communication processor module. The wireless communication module 160 receives an electromagnetic wave through the antenna 2, performs frequency modulation and filtering processing on an electromagnetic wave signal, and sends a processed signal to the processor 110. The wireless communication module 160 may further receive a to-be-sent signal from the processor 110, perform frequency modulation and amplification on the signal, and convert the signal into an electromagnetic wave for radiation through the antenna 2.

In some embodiments, the antenna 1 and the mobile communication module 150 in the electronic device 100 are coupled, and the antenna 2 and the wireless communication module 160 in the electronic device 100 are coupled, so that the electronic device 100 can communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite based augmentation system (satellite based augmentation system, SBAS).

The electronic device 100 may implement a display function through the GPU, the display 194, the application processor, and the like. The GPU is a microprocessor for image processing, and is connected to the display 194 and the application processor. The GPU is configured to: perform mathematical and geometric computation, and render an image. The processor 110 may include one or more GPUs, which execute program instructions to generate or change display information.

The display 194 is configured to display an image, a video, and the like. The display 194 includes a display panel. The display panel may be a liquid crystal display (liquid crystal display, LCD). The display panel may alternatively be an organic light-emitting diode (organic light-emitting diode, OLED), an active-matrix organic light-emitting diode (active-matrix organic light-emitting diode, AMOLED), a flexible light-emitting diode (flexible light-emitting diode, FLED), a mini-LED, a micro-LED, a micro-OLED, a quantum dot light emitting diode (quantum dot light-emitting diode, QLED), or the like. In some embodiments, the electronic device 100 may include one or N displays 194, where N is a positive integer greater than 1.

The electronic device 100 may implement an image shooting function through the ISP, the camera 193, the video codec, the GPU, the display 194, the application processor, and the like.

The ISP is configured to process data fed back by the camera 193. For example, during photographing, a shutter is pressed, and light is transmitted to a photosensitive element of the camera through a lens. An optical signal is converted into an electrical signal, and the photosensitive element of the camera transmits the electrical signal to the ISP for processing, to convert the electrical signal into a visible image. The ISP may further perform algorithm optimization on noise, and brightness of the image. The ISP may further optimize parameters such as exposure and a color temperature of an image shooting scenario. In some embodiments, the ISP may be disposed in the camera 193.

The camera 193 is configured to capture a static image or a video. An optical image of an object is generated through a lens, and is projected onto a photosensitive element. The photosensitive element may be a charge coupled device (charge coupled device, CCD) or a complementary metal-oxide-semiconductor (complementary metal-oxide-semiconductor, CMOS) phototransistor. The photosensitive element converts an optical signal into an electrical signal, and then transmits the electrical signal to the ISP to convert the electrical signal into a digital image signal. The ISP outputs the digital image signal to the DSP for processing. The DSP converts the digital image signal into an image signal in a standard format like RGB or YUV. In some embodiments, the electronic device 100 may include one or N cameras 193, where N is a positive integer greater than 1.

The digital signal processor is configured to process a digital signal, and may process another digital signal in addition to the digital image signal. For example, when the electronic device 100 selects a frequency, the digital signal processor is configured to perform Fourier transformation on frequency energy.

The video codec is configured to compress or decompress a digital video. The electronic device 100 may support one or more video codecs. In this way, the electronic device 100 may play back or record videos in a plurality of coding formats, for example, moving picture experts group (moving picture experts group, MPEG)-1, MPEG-2, MPEG-3, and MPEG-4.

The NPU is a neural-network (neural-network, NN) computing processor. The NPU quickly processes input information by referring to a structure of a biological neural network, for example, a transfer mode between human brain neurons, and may further continuously perform self-learning. Applications such as intelligent cognition of the electronic device 100 may be implemented through the NPU, for example, image recognition, facial recognition, speech recognition, and text understanding.

The external memory interface 120 may be used to connect to an external storage card, for example, a micro SD card, to extend a storage capability of the electronic device 100. The external storage card communicates with the processor 110 through the external memory interface 120, to implement a data storage function. For example, files such as music and videos are stored in the external storage card.

The internal memory 121 may be configured to store computer-executable program code. The executable program code includes instructions. The processor 110 runs the instructions stored in the internal memory 121, to perform various function applications of the electronic device 100 and data processing. The internal memory 121 may include a program storage region and a data storage region. The program storage region may store an operating system, an application required by at least one function (for example, a voice playing function or an image playing function), and the like. The data storage region may store data (such as audio data and an address book) created during use of the electronic device 100, and the like. In addition, the internal memory 121 may include a high-speed random access memory, or may include a non-volatile memory, for example, at least one magnetic disk storage device, a flash memory device, or a universal flash storage (universal flash storage, UFS).

The electronic device 100 may implement an audio function, for example, music playing and recording, through the audio module 170, the speaker 170A, the receiver 170B, the microphone 170C, the headset jack 170D, the application processor, and the like.

The audio module 170 is configured to convert digital audio information into an analog audio signal for output, and is also configured to convert an analog audio input into a digital audio signal. The audio module 170 may be further configured to encode and decode an audio signal. In some embodiments, the audio module 170 may be disposed in the processor 110, or some function modules in the audio module 170 are disposed in the processor 110.

The speaker 170A, also referred to as a "loudspeaker", is configured to convert an electrical audio signal into a sound signal. The electronic device 100 may be used to listen to music or answer a call in a hands-free mode over the speaker 170A.

The receiver 170B, also referred to as an "earpiece", is configured to convert an electrical audio signal into a sound signal. When a call is answered or a voice message is received through the electronic device 100, the receiver 170B may be put close to a human ear to listen to a voice.

The microphone 170C, also referred to as a "mike" or a "mic", is configured to convert a sound signal into an electrical signal. When making a call or sending a voice message, a user may make a sound near the microphone 170C through the mouth of the user, to input a sound signal to the microphone 170C. At least one microphone 170C may be disposed in the electronic device 100. In some other embodiments, two microphones 170C may be disposed in the electronic device 100, to collect a sound signal and implement a noise reduction function. In some other embodiments, three, four, or more microphones 170C may alternatively be disposed in the electronic device 100, to collect a sound signal, implement noise reduction, identify a sound source, implement a directional recording function, and the like.

The headset jack 170D is configured to connect to a wired headset. The headset jack 170D may be the USB port 130, or may be a 3.5 mm open mobile terminal platform (open mobile terminal platform, OMTP) standard interface, or a cellular telecommunications industry association of the USA (cellular telecommunications industry association of the USA, CTIA) standard interface.

The pressure sensor 180A is configured to sense a pressure signal, and can convert the pressure signal into an electrical signal. In some embodiments, the pressure sensor 180A may be disposed on the display 194. There are a plurality of types of pressure sensors 180A, such as a resistive pressure sensor, an inductive pressure sensor, and a capacitive pressure sensor. The capacitive pressure sensor may include at least two parallel plates made of conductive materials. When a force is applied to the pressure sensor 180A, capacitance between electrodes changes. The electronic device 100 determines pressure intensity based on the change in the capacitance. When a touch operation is performed on the display 194, the electronic device 100 detects intensity of the touch operation through the pressure sensor 180A. The electronic device 100 may also calculate a touch location based on a detection signal of the pressure sensor 180A. In some embodiments, touch operations that are performed at a same touch location but have different touch operation intensity may correspond to different operation instructions. For example, when a touch operation whose touch operation intensity is less than a first pressure threshold is performed on an SMS message application icon, an instruction for viewing an SMS message is performed. When a touch operation whose touch operation intensity is greater than or equal to the first pressure threshold is performed on the SMS message application icon, an instruction for creating an SMS message is performed.

The gyroscope sensor 180B may be configured to determine a moving posture of the electronic device 100. In some embodiments, an angular velocity of the electronic device 100 around three axes (namely, axes x, y, and z) may be determined by using the gyroscope sensor 180B. The gyroscope sensor 180B may be configured to implement image stabilization during image shooting. For example, when the shutter is pressed, the gyroscope sensor 180B detects an angle at which the electronic device 100 jitters, calculates, based on the angle, a distance for which a lens module needs to compensate, and allows the lens to cancel the jitter of the electronic device 100 through reverse motion, to implement image stabilization. The gyroscope sensor 180B may also be used in a navigation scenario and a somatic game scenario.

The barometric pressure sensor 180C is configured to measure barometric pressure. In some embodiments, the electronic device 100 calculates an altitude through the barometric pressure measured by the barometric pressure sensor 180C, to assist in positioning and navigation.

The magnetic sensor 180D includes a Hall sensor. The electronic device 100 may detect opening and closing of a flip cover by using the magnetic sensor 180D. In some embodiments, when the electronic device 100 is a flip phone, the electronic device 100 may detect opening and closing of a flip cover based on the magnetic sensor 180D. Further, a feature like automatic unlocking upon opening of the flip cover is set based on a detected opening or closing state of the flip cover.

The acceleration sensor 180E may detect accelerations in various directions (usually on three axes) of the electronic device 100. The acceleration sensor may detect a magnitude and a direction of gravity when the electronic device 100 is still. The acceleration sensor may be further configured to identify a posture of the electronic device, and is used in an application, for example, switching between a landscape mode and a portrait mode or a pedometer.

The distance sensor 180F is configured to measure a distance. The electronic device 100 may measure the distance in an infrared manner or a laser manner. In some embodiments, in an image shooting scenario, the electronic device 100 may measure a distance through the distance sensor 180F to implement quick focusing.

The optical proximity sensor 180G may include, for example, a light-emitting diode (LED) and an optical detector, for example, a photodiode. The light-emitting diode may be an infrared light-emitting diode. The electronic device 100 emits infrared light by using the light-emitting diode. The electronic device 100 detects infrared reflected light from a nearby object through the photodiode. When sufficient reflected light is detected, it may be determined that there is an object near the electronic device 100. When insufficient reflected light is detected, the electronic device 100 may determine that there is no object near the electronic device 100. The electronic device 100 may detect, by using the optical proximity sensor 180G, that the user holds the electronic device 100 close to an ear for a call, to automatically turn off a screen for power saving. The optical proximity sensor 180G may also be used in a flip cover mode or a pocket mode to automatically perform screen unlocking or locking.

The ambient light sensor 180L is configured to sense ambient light brightness. The electronic device 100 may adaptively adjust brightness of the display 194 based on the sensed ambient light brightness. The ambient light sensor 180L may also be configured to automatically adjust white balance during image shooting. The ambient light sensor 180L may also cooperate with the optical proximity sensor 180G to detect whether the electronic device 100 is in a pocket, to avoid an accidental touch.

The fingerprint sensor 180H is configured to collect a fingerprint. The electronic device 100 may use a feature of the collected fingerprint to implement fingerprint-based unlocking, application lock access, fingerprint-based image shooting, fingerprint-based call answering, and the like.

The temperature sensor 180J is configured to detect a temperature. In some embodiments, the electronic device 100 executes a temperature processing policy through the temperature detected by the temperature sensor 180J. For example, when the temperature reported by the temperature sensor 180J exceeds a threshold, the electronic device 100 lowers performance of a processor near the temperature sensor 180J, to reduce power consumption for thermal protection. In some other embodiments, when the temperature is lower than another threshold, the electronic device 100 heats the battery 142 to prevent the electronic device 100 from being shut down abnormally due to a low temperature. In some other embodiments, when the temperature is lower than still another threshold, the electronic device 100 boosts an output voltage of the battery 142 to avoid abnormal shutdown caused by a low temperature.

The touch sensor 180K is also referred to as a "touch panel". The touch sensor 180K may be disposed on the display 194, and the touch sensor 180K and the display 194 constitute a touchscreen, which is also referred to as a "touch screen". The touch sensor 180K is configured to detect a touch operation performed on or near the touch sensor. The touch sensor may transfer the detected touch operation to the application processor to determine a type of the touch event. A visual output related to the touch operation may be provided through the display 194. In some other embodiments, the touch sensor 180K may also be disposed on a surface of the electronic device 100 at a location different from that of the display 194.

The bone conduction sensor 180M may obtain a vibration signal. In some embodiments, the bone conduction sensor 180M may obtain a vibration signal of a vibration bone of a human vocal-cord part. The bone conduction sensor 180M may also be in contact with a body pulse to receive a blood pressure beating signal. In some embodiments, the bone conduction sensor 180M may alternatively be disposed in the headset, to obtain a bone conduction headset. The audio module 170 may obtain a speech signal through parsing based on the vibration signal that is of the vibration bone of the vocal-cord part and that is obtained by the bone conduction sensor 180M, to implement a speech function. The application processor may parse heart rate information based on the blood pressure beating signal obtained by the bone conduction sensor 180M, to implement a heart rate detection function.

The button 190 includes a power button, a volume button, and the like. The button 190 may be a mechanical button, or may be a touch button. The electronic device 100 may receive a button input, and generate a button signal input related to a user setting and function control of the electronic device 100.

The motor 191 may generate a vibration prompt. The motor 191 may be configured to provide an incoming call vibration prompt and a touch vibration feedback. For example, touch operations performed on different applications (for example, photographing and audio playing) may correspond to different vibration feedback effects. The motor 191 may also correspond to different vibration feedback effects for touch operations performed on different regions of the display 194. Different application scenarios (for example, a time reminder, information receiving, an alarm clock, and a game) may also correspond to different vibration feedback effects. A touch vibration feedback effect may be further user-defined.

The indicator 192 may be an indicator light, and may be configured to indicate a charging status and a power change, or may be configured to indicate a message, a missed call, a notification, and the like.

The SIM card interface 195 is configured to connect to a SIM card. The SIM card may be inserted into the SIM card interface 195 or removed from the SIM card interface 195, to implement contact with or separation from the electronic device 100. The electronic device 100 may support one or N SIM card interfaces, where N is a positive integer greater than 1. The SIM card interface 195 may support a nano-SIM card, a micro-SIM card, a SIM card, and the like. A plurality of cards may be inserted into a same SIM card interface 195 at the same time. The plurality of cards may be of a same type or different types. The SIM card interface 195 may also be compatible with different types of SIM cards. The SIM card interface 195 may also be compatible with an external storage card. The electronic device 100 interacts with a network through the SIM card, to implement functions such as conversation and data communication. In some embodiments, the electronic device 100 uses an eSIM, namely, an embedded SIM card. The eSIM card may be embedded into the electronic device 100, and cannot be separated from the electronic device 100.

The following describes a positioning scenario provided in embodiments of this application.

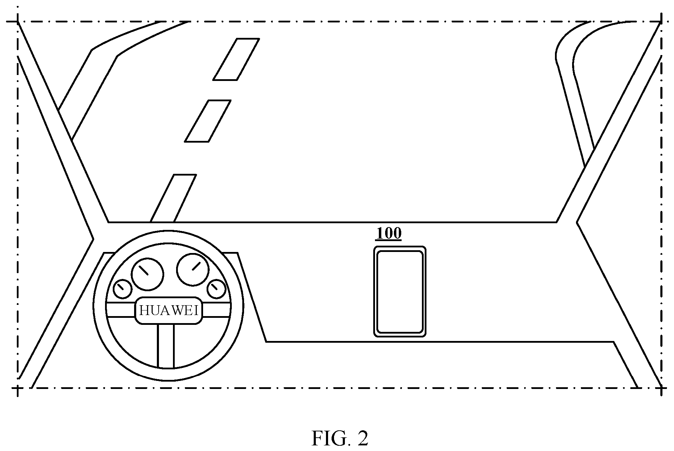

FIG. 2 is a diagram of a positioning scenario according to an embodiment of this application.

As shown in FIG. 2, a user may carry an electronic device 100 and drive a vehicle to a garage. The user does not actively start a navigation application on the electronic device 100 for navigation. When the electronic device 100 identifies that a current status of the electronic device 100 is an in-vehicle state and the electronic device 100 enters a geo-fence of the garage, the electronic device 100 may start a navigation and positioning module, and continuously measure a location of the electronic device 100 through GNSS and VDR fused positioning. When the electronic device 100 enters the garage, GNSS positioning cannot be performed because of a poor GNSS signal, and the electronic device 100 may continuously measure the location of the electronic device 100 through VDR positioning. When the electronic device 100 identifies that the status of the vehicle is a parked state, the electronic device 100 may record a current location of the electronic device 100 as a parking location of the vehicle.

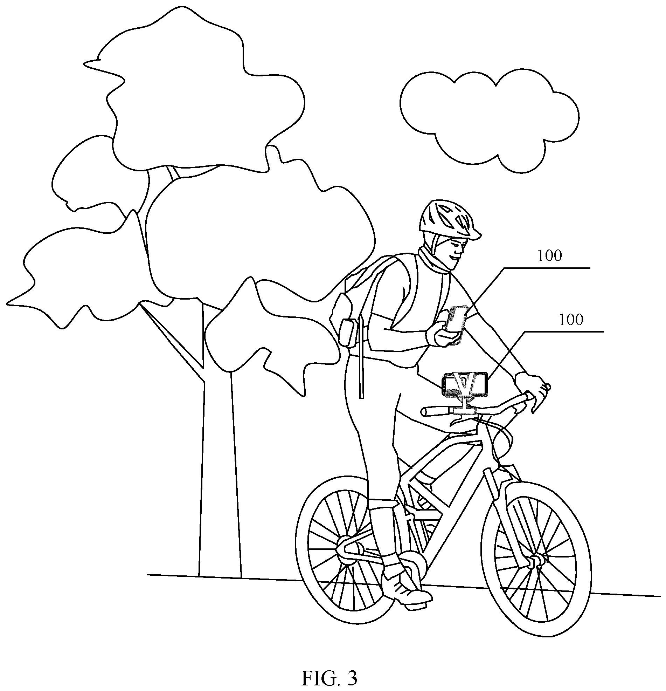

FIG. 3 is a diagram of another positioning scenario according to an embodiment of this application.

As shown in FIG. 3, the user may carry the electronic device 100 and ride a bicycle to the garage. The user may hold the electronic device 100, or may fasten the electronic device 100 to the bicycle through a bracket, or the like. The user does not actively start the navigation application on the electronic device 100 for navigation.

When the electronic device 100 identifies that a current status of the electronic device 100 is a riding state and the electronic device 100 enters the geo-fence of the garage, the electronic device 100 may start the navigation and positioning module, and continuously measure the location of the electronic device 100 through GNSS and DR fused positioning. When the electronic device 100 enters the garage, GNSS positioning cannot be performed because of a poor GNSS signal, and the electronic device 100 may continuously measure the location of the electronic device 100 through DR positioning. When the electronic device 100 identifies that the user stops riding, the electronic device 100 may record a current location of the electronic device 100 as a parking location of the bicycle.

The positioning method provided in embodiments of this application is not limited to the vehicle scenario or the bicycle riding scenario, and may be another scenario. Details are not described herein again.

The following uses a vehicle traveling scenario as an example to describe a principle of a positioning method provided in embodiments of this application.

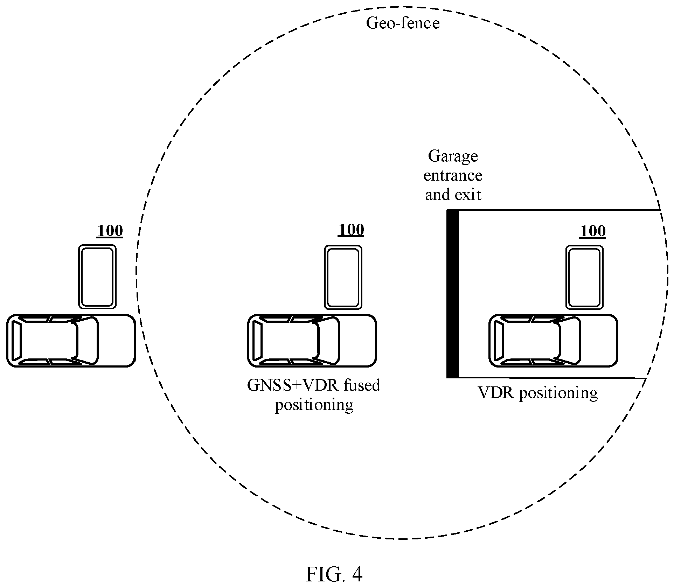

FIG. 4 is a diagram of a principle of a positioning method according to an embodiment of this application.

As shown in FIG. 4, an electronic device 100 may prestore fence data of a geo-fence of a garage. When the electronic device 100 detects that a current status is an in-vehicle state and the electronic device 100 travels into the geo-fence of the garage, the electronic device 100 may start a navigation and positioning module, and perform GNSS and VDR fused positioning through the navigation and positioning module, to continuously obtain a location of the electronic device 100. Because the electronic device 100 can obtain a GNSS signal when entering the geo-fence of the garage but not entering the garage, the electronic device 100 may perform GNSS and VDR fused positioning based on the GNSS signal and IMU data. However, after the electronic device 100 enters the garage, GNSS positioning cannot be performed due to a poor GNSS signal. The electronic device 100 may perform VDR positioning based on IMU data and with reference to a location obtained by the electronic device 100 before the electronic device 100 enters the garage, to continuously obtain a location of the electronic device 100 in the garage. When the electronic device 100 detects that a vehicle is parked, the electronic device 100 may record a current location of the electronic device 100 as a parking location of the vehicle. The electronic device 100 may output prompt information, where the prompt information indicates the parking location of the vehicle in the garage. In this way, when the user does not start the navigation and positioning module in advance through a navigation application, the electronic device can automatically start the navigation and positioning module when identifying that the electronic device is to enter the garage, to obtain a real-time location of the electronic device entering the garage.

The following describes a geo-fence division principle provided in embodiments of this application.

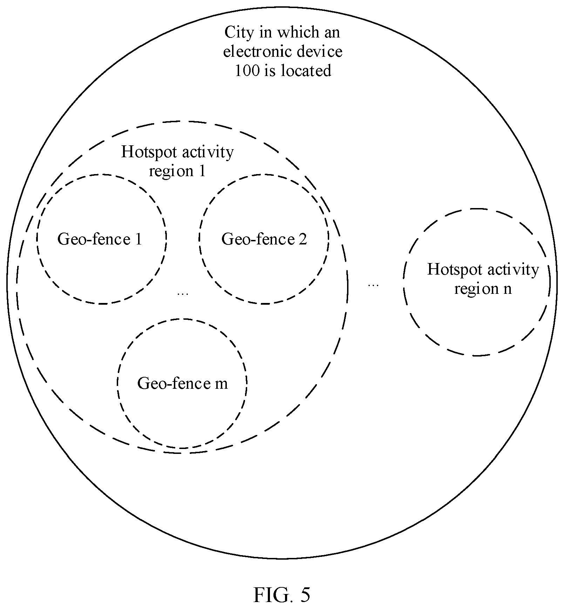

FIG. 5 is a diagram of a geo-fence division principle according to an embodiment of this application.

As shown in FIG. 5, a city in which the electronic device 100 is located may be divided into n hotspot activity regions, where n is a positive integer. Each hotspot activity region may include m geo-fences of a garage, where m is a positive integer.

A geo-fence database may store fence data of a plurality of geo-fences in a plurality of cities. The geo-fence data may include information such as cellular cell information, Wi-Fi fingerprint library data, and a GNSS location. The cellular cell information may include a cellular cell at a location of the geo-fence. The Wi-Fi fingerprint library data includes a MAC address, an IP address, Wi-Fi signal strength, and the like that are of a Wi-Fi access point sending a Wi-Fi signal and that are detected at the location of the geo-fence. The GNSS location is a positioning result obtained by performing common positioning resolving by a GNSS module based on GNSS measurement information.

In a possible implementation, for preventing the electronic device 100 from injecting the entire geo-fence database into a geo-fence detection module to cause excessive memory overheads, the electronic device 100 may detect a hotspot activity region in which the electronic device 100 is located, and inject geo-fence data of a plurality of geo-fences in the hotspot activity region in which the electronic device 100 is located into the geo-fence detection module. The geo-fence detection module is configured to detect whether the electronic device 100 enters a geo-fence of a garage.

In embodiments of this application, the electronic device 100 may measure information such as cellular cell information, Wi-Fi fingerprint library data, and a GNSS location of a location of a garage at which a user frequently arrives (for example, more than three times a week). The electronic device 100 may set a geo-fence around the garage at which the user frequently arrives, and store information such as cellular cell information, Wi-Fi fingerprint library data, and a GNSS location of the location of the geo-fence as geo-fence data of the geo-fence into a geo-fence database.

The geo-fence data may be locally stored in the electronic device 100, or may be stored in a cloud server. The electronic device 100 may query the geo-fence data from the cloud server.

In a possible implementation, a plurality of measurement terminals may separately measure geo-fence data of a plurality of garages. The plurality of measurement terminals may report, to the cloud server, the geo-fence data that is of the plurality of garages and that is measured by the plurality of measurement terminals. The cloud server may store the geo-fence data reported by the plurality of measurement terminals into the geo-fence database. When the electronic device 100 requests, from the cloud server, the geo-fence data in the hotspot activity region in which the electronic device 100 is located, the cloud server may send the geo-fence data in the hotspot activity region in which the electronic device 100 is located to the electronic device 100. The electronic device 100 may inject the geo-fence data of the hotspot activity region in which the electronic device 100 is located into the geo-fence detection module.

The following describes a module component of the electronic device 100 provided in an embodiment of this application.

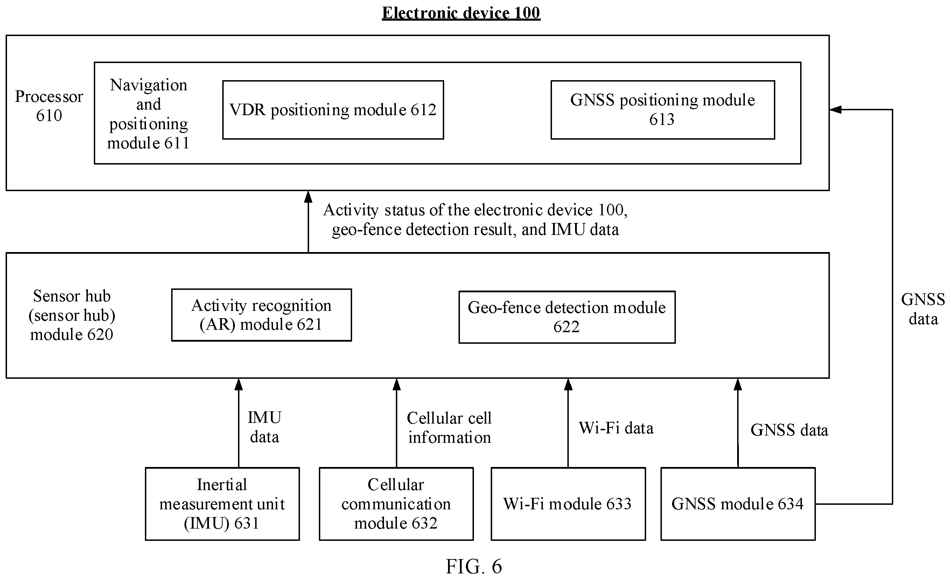

FIG. 6 is a diagram of a module component of the electronic device 100 according to an embodiment of this application.

As shown in FIG. 6, the electronic device 100 may include a processor 610, a sensor hub (sensor hub) module 620, an inertial measurement unit (IMU) 631, a cellular communication module 632, a Wi-Fi module 633, and a GNSS module 634. The processor 610 may include a navigation and positioning module 611. The navigation and positioning module 611 may include a VDR positioning module 612 and a GNSS positioning module 613. The sensor hub module 620 may include an activity recognition (activity recognition, AR) module 621 and a geo-fence detection module 622.

The IMU 631 may include sensors such as a gyroscope and an accelerometer, and IMU data may include gyroscope data, acceleration data, and the like. After obtaining the IMU data, the IMU 631 may send the IMU data to the sensor hub module 620.

The cellular communication module 632 may be configured to: detect a target cellular cell in which the electronic device 100 is located in a plurality of cellular cells obtained by dividing a cellular network, and send cellular cell information of the target cellular cell to the sensor hub module 620. The cellular communication module 632 may be further configured to perform cellular communication with the cellular network, where the cellular communication includes but is not limited to 2G/3G/4G/5G communication.

The Wi-Fi module 633 may be configured to obtain Wi-Fi data such as a signal identifier and signal strength information of a Wi-Fi signal. The Wi-Fi module 633 may send the Wi-Fi data to the sensor hub module 620. The Wi-Fi module 633 may further implement wireless communication with another device based on a Wi-Fi technology.

The GNSS module 634 may be configured to: receive a satellite signal, and obtain GNSS measurement information used for positioning resolving. The GNSS measurement information may include information such as a pseudo-range, a carrier phase, and a Doppler frequency. The GNSS module 634 may further complete resolving of a common positioning result based on the GNSS measurement information, to obtain a GNSS location. Because the GNSS location output by the GNSS module 634 is not accurate (for example, accurate to 10 meters), the electronic device 100 cannot accurately identify a parking space at which the electronic device 100 is located. Therefore, when the electronic device 100 needs to perform navigation and positioning to obtain an accurate location of the electronic device 100, the GNSS module 634 needs to send GNSS data to the navigation and positioning module 611, and the GNSS positioning module 613 in the navigation and positioning module 611 performs high-precision positioning resolving (for example, real-time kinematic (real-time kinematic, RTK) carrier phase difference positioning resolving), to obtain high-precision location information. Positioning precision of the high-precision location information is higher than positioning precision of the GNSS location. The GNSS module 634 may further send the GNSS data to the sensor hub module 620. The GNSS data may include the GNSS measurement information, or the GNSS data may include the GNSS measurement information and the GNSS location.

In an example, the GNSS module 634 may alternatively not directly send the GNSS data to the processor 610, but the sensor hub module 620 reports the GNSS data to the processor 610.

After obtaining the IMU data, the sensor hub module 620 may determine an activity status of the electronic device 100 based on the IMU data through the AR module 621. The activity status of the electronic device 100 may include an in-vehicle state, a parked state, a riding state, and the like. The IMU data may include gyroscope data and acceleration data.

After obtaining the cellular cell information, the Wi-Fi data, and the GNSS location, the sensor hub module 620 may detect, through the geo-fence detection module 622, whether the electronic device 100 enters a geo-fence of a garage.

The sensor hub module 620 may send the activity status of the electronic device 100, a geo-fence detection result (for example, entering the geo-fence of the garage), and the IMU data to the processor 610.

When detecting that the activity status of the electronic device 100 is an in-vehicle state and the geo-fence detection result is that the electronic device 100 enters the geo-fence of the garage, the processor 610 may invoke the navigation and positioning module 611 to perform continuous positioning. When performing continuous positioning, the navigation and positioning module 611 may simultaneously start the VDR positioning module 612 and the GNSS positioning module 613. The VDR positioning module 612 is configured to determine displacement information of the electronic device 100 based on the IMU data, where the displacement information includes a movement direction, a movement distance, and the like. The GNSS positioning module 613 may be configured to perform high-precision positioning resolving based on the GNSS data, to obtain the high-precision location information. When the navigation and positioning module 611 can obtain the GNSS data sent by the GNSS module 634, the navigation and positioning module 611 may perform fused positioning through the VDR positioning module 612 and the GNSS positioning module 613 to continuously obtain a location of the electronic device 100. When the navigation and positioning module 611 cannot obtain the GNSS data sent by the GNSS module 634, the navigation and positioning module 611 may perform positioning through the VDR positioning module 612.

When the navigation and positioning module 611 cannot obtain the GNSS data sent by the GNSS module 634, the navigation and positioning module 611 may obtain high-precision location information obtained by the GNSS positioning module 613 through resolving last time. The VDR positioning module 612 may resolve displacement information of the electronic device 100 in a target time period based on the IMU data, where the target time period is from a moment at which the GNSS positioning module 613 obtains the high-precision location information through resolving last time to a current moment. The navigation and positioning module 611 may determine a location of the electronic device 100 at the current moment based on the high-precision location information obtained through resolving last time and the displacement information of the electronic device 100 in the target time period.

For example, when the navigation and positioning module 611 obtains, at a first moment, GNSS data sent by the GNSS module 634, the navigation and positioning module 611 obtains, through resolving, a location of the electronic device 100 at the first moment based on the GNSS data. When the navigation and positioning module 611 does not obtain, at a second moment, GNSS data sent by the GNSS module 634, the navigation and positioning module 611 determines displacement information of the electronic device 100 from the first moment to the second moment through the VDR positioning module 612 based on the IMU data. The navigation and positioning module 611 determines a location of the electronic device 100 at the second moment based on the location of the electronic device 100 at the first moment and the displacement information from the first moment to the second moment. The GNSS data may include GNSS measurement information, or the GNSS data may include GNSS measurement information and a GNSS location.

In an example, the processor 610 may be an application processor (application processor, AP).

In embodiments of this application, the AR module 621 is not limited to being disposed in the sensor hub module 620, and may be disposed in another component. For example, the AR module 621 may be disposed in the processor 610. This is not limited herein. The geo-fence detection module 622 is not limited to being disposed in the sensor hub module 620, and may be alternatively disposed in another component. For example, the geo-fence detection module 622 may be disposed in the processor 610. This is not limited herein.

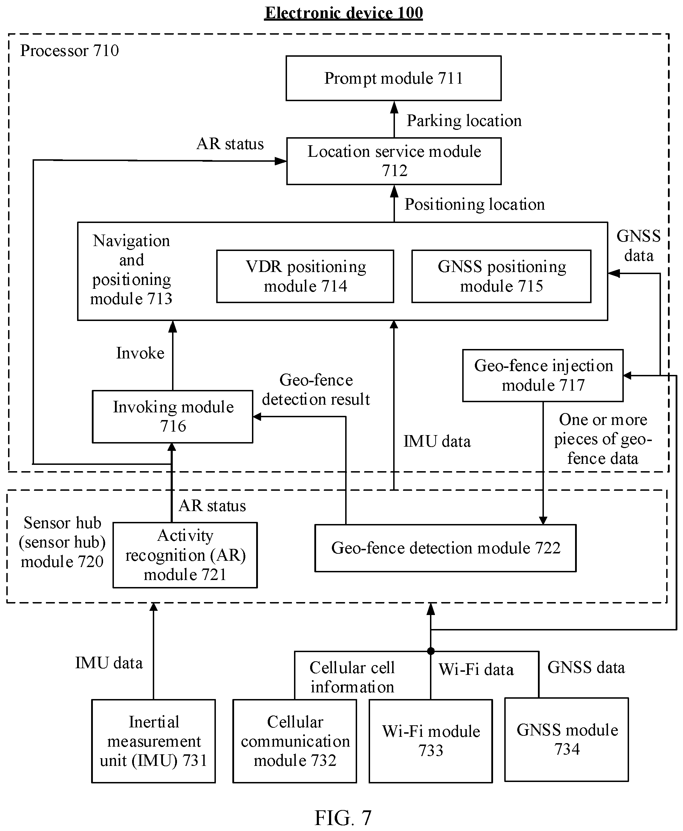

FIG. 7 is a diagram of a module component of the electronic device 100 according to another embodiment of this application.

As shown in FIG. 7, the electronic device 100 may include a processor 710, a sensor hub module 720, an inertial measurement unit (IMU) 731, a cellular communication module 732, a Wi-Fi module 733, and a GNSS module 734.

The processor 710 may include a prompt module 711, a location service module 712, a navigation and positioning module 713, an invoking module 716, and a geo-fence injection module 717. The navigation and positioning module 713 may include a VDR positioning module 714 and a GNSS positioning module 715. The sensor hub module 720 may include an activity recognition (AR) module 721 and a geo-fence detection module 722.

The IMU 731 may include sensors such as a gyroscope and an accelerometer, and IMU data may include gyroscope data, acceleration data, and the like. After obtaining the IMU data, the IMU 731 may send the IMU data to the sensor hub module 620.

The cellular communication module 732 may be configured to: detect a target cellular cell in which the electronic device 100 is located in a plurality of cellular cells obtained by dividing a cellular network, and send cellular cell information of the target cellular cell to the sensor hub module 720. The cellular communication module 732 may be further configured to perform cellular communication with the cellular network, where the cellular communication includes but is not limited to 2G/3G/4G/5G communication.

The Wi-Fi module 733 may be configured to obtain Wi-Fi data such as a signal identifier and signal strength information of a Wi-Fi signal. The Wi-Fi module 733 may send the Wi-Fi data to the sensor hub module 720. The Wi-Fi module 733 may further implement wireless communication with another device based on a Wi-Fi technology.

The GNSS module 734 may be configured to: receive a satellite signal, and obtain GNSS measurement information used for positioning resolving. The GNSS measurement information may include information such as a pseudo-range, a carrier phase, and a Doppler frequency. The GNSS module 734 may further complete resolving of a common positioning result based on the measurement information, to obtain a GNSS location. Because the GNSS location output by the GNSS module 734 is not accurate (for example, accurate to 10 meters), the electronic device 100 cannot accurately identify a parking space at which the electronic device 100 is located. Therefore, when the electronic device 100 needs to perform navigation and positioning to obtain an accurate location of the electronic device 100, the GNSS module 734 needs to send GNSS data to the navigation and positioning module 713, and the GNSS positioning module 715 in the navigation and positioning module 713 performs high-precision positioning resolving (for example, real-time kinematic (real-time kinematic, RTK) carrier phase difference positioning resolving), to obtain high-precision location information. Positioning precision of the high-precision location information is higher than positioning precision of the GNSS location. The GNSS module 734 may further send the GNSS data to the sensor hub module 720. The GNSS data may include the GNSS measurement information, or the GNSS data may include the GNSS measurement information and the GNSS location.

In an example, the GNSS module 734 may alternatively not directly send the GNSS data to the processor 710, but the sensor hub module 720 reports the GNSS location data to the processor 710.

After obtaining the IMU data, the sensor hub module 720 may determine an activity status of the electronic device 100 based on the IMU data through the AR module 721. The activity status of the electronic device 100 may include an in-vehicle state, a parked state, a riding state, and the like. The IMU data may include gyroscope data and acceleration data.

After obtaining information such as the cellular cell information, the Wi-Fi data, and the GNSS data, the sensor hub module 720 may detect, through the geo-fence detection module 722, whether the electronic device 100 enters a geo-fence of a garage.

The sensor hub module 720 may send the activity status of the electronic device 100, a geo-fence detection result (for example, entering the geo-fence of the garage), and the IMU data to the processor 710.

The geo-fence injection module 717 may determine, based on one or more of the cellular cell information, the Wi-Fi data, the GNSS location, and the measurement information, a hotspot activity region (which may be referred to as a target activity region) in which the electronic device 100 is currently located. The geo-fence injection module 717 may obtain, from a geo-fence database through matching, one or more pieces of geo-fence data corresponding to the target activity region, and send the one or more pieces of geo-fence data corresponding to the target activity region to the geo-fence detection module 722. The geo-fence detection module 722 may detect, based on the one or more pieces of geo-fence data corresponding to the target activity region, whether the electronic device 100 enters the geo-fence of the garage.

In this way, the one or more pieces of geo-fence data corresponding to the hotspot activity region in which the electronic device 100 is currently located are injected into the geo-fence detection module 722, to avoid injecting all geo-fence data in the geo-fence database into the geo-fence detection module 722. This can reduce data storage overheads of the geo-fence detection module 722, and shorten time for the geo-fence detection module 722 to detect that the electronic device 100 enters or exits the geo-fence.

After obtaining an AR status of the electronic device 100 and the geo-fence detection result, the invoking module 716 may determine whether the AR status of the electronic device 100 is an in-vehicle state or a riding state, and the geo-fence detection result is that the electronic device 100 enters a geo-fence of a garage. When the AR status of the electronic device 100 is the in-vehicle state or the riding state, and the electronic device 100 enters a geo-fence of a garage, the electronic device 100 may invoke the navigation and positioning module 713 to perform continuous positioning.

When performing continuous positioning, the navigation and positioning module 713 may simultaneously start the VDR positioning module 714 and the GNSS positioning module 715. The VDR positioning module 714 is configured to determine displacement information of the electronic device 100 based on the IMU data, where the displacement information includes a movement direction, a movement distance, and the like. The GNSS positioning module 715 may be configured to perform high-precision positioning resolving based on the GNSS data, to obtain the high-precision location information. When the navigation and positioning module 713 can obtain the GNSS data sent by the GNSS module 734, the navigation and positioning module 713 may perform fused positioning through the VDR positioning module 714 and the GNSS positioning module 715 to continuously obtain a location of the electronic device 100. When the navigation and positioning module 713 cannot obtain the GNSS data sent by the GNSS module 734, the navigation and positioning module 713 may perform positioning through the VDR positioning module 714.

When the navigation and positioning module 713 cannot obtain the GNSS data sent by the GNSS module 734, the navigation and positioning module 713 may obtain high-precision location information obtained by the GNSS positioning module 715 through resolving last time. The VDR positioning module 714 may resolve displacement information of the electronic device 100 in a target time period based on the IMU data, where the target time period is from a moment at which the GNSS positioning module 715 obtains the high-precision location information through resolving last time to a current moment. The navigation and positioning module 713 may determine a location of the electronic device 100 at the current moment based on the high-precision location information obtained through resolving last time and the displacement information of the electronic device 100 in the target time period.

For example, when the navigation and positioning module 713 obtains, at a first moment, GNSS data sent by the GNSS module 734, the navigation and positioning module 713 obtains, through resolving, a location of the electronic device 100 at the first moment based on the GNSS data. When the navigation and positioning module 713 does not obtain, at a second moment, GNSS data sent by the GNSS module 734, the navigation and positioning module 713 determines displacement information of the electronic device 100 from the first moment to the second moment through the VDR positioning module 714 based on the IMU data. The navigation and positioning module 713 determines a location of the electronic device 100 at the second moment based on the location of the electronic device 100 at the first moment and the displacement information from the first moment to the second moment. The GNSS data may include GNSS measurement information, or the GNSS data may include GNSS measurement information and a GNSS location. The GNSS data may include GNSS measurement information, or the GNSS data may include GNSS measurement information and a GNSS location.

The navigation and positioning module 713 may continuously send a positioning location of the electronic device 100 to the location service module 712. The location service module 712 may determine, based on the AR status, whether the electronic device 100 is in the parked state. When the electronic device 100 is in the parked state, the location service module 712 may determine the obtained positioning location of the electronic device 100 as a parking location, and send the parking location to the prompt module 711. The prompt module 711 is configured to output prompt information, where the prompt information is used to prompt the user with the parking location determined by the electronic device 100.

In an example, the activity status of the electronic device 100 is not limited to being determined based on the IMU data. The AR status of the electronic device 100 may be alternatively determined based on connection information of a Bluetooth module (not shown in FIG. 7) on the electronic device 100. When the AR module 721 determines, based on the connection information of the Bluetooth module, that the Bluetooth module establishes a Bluetooth connection to a vehicle, the electronic device 100 may determine that the electronic device 100 is in the in-vehicle state. When the AR module 721 determines, based on the connection information of the Bluetooth module, that the Bluetooth connection between the electronic device 100 and the vehicle is disconnected, the AR module 721 may determine that the vehicle is in the parked state.

The AR module 721 and the geo-fence detection module 722 may be disposed in the sensor hub module 720, or may be disposed in the processor 710. When the AR module 721 and the geo-fence detection module 722 are disposed in the processor 710, the electronic device 100 may alternatively not include the sensor hub module 720.

In an example, the AR module 721 and the geo-fence detection module 722 are disposed in the processor 710. The electronic device 100 may establish the Bluetooth connection to the vehicle. When the vehicle is started, the vehicle may send vehicle status information 1 to the electronic device 100 through the Bluetooth connection. The vehicle status information 1 indicates that the vehicle is started. When the vehicle is parked and flame-out, the vehicle may send vehicle status information 2 to the electronic device 100 through the Bluetooth connection, where the vehicle status information 2 indicates that the vehicle is parked. When the electronic device 100 receives the vehicle status information 1, the AR module 721 may determine that the AR status of the electronic device 100 is the in-vehicle state. When the electronic device 100 receives the vehicle status information 2, the AR module 721 may determine that the vehicle is in the parked state.

In an example, the processor 710 may be an application processor (application processor, AP).

In an example, the geo-fence detection module 722 may first detect whether the electronic device 100 enters the geo-fence of the garage. When the geo-fence detection module 722 enters the geo-fence of the garage, the geo-fence detection module 722 may start the AR module 721 and the IMU 731. After the AR module 721 and the IMU 731 are started, the IMU 731 may measure the IMU data, and send the IMU data to the AR module 721. After obtaining the IMU data, the AR module 721 may identify the AR status of the electronic device 100 based on the IMU data, and send the AR status to the invoking module 716. In this way, the IMU 731 and the AR module 721 may be started to work only after the electronic device 100 enters the geo-fence of the garage, so that power consumption of the electronic device 100 is reduced.

In an example, the IMU 731 may continuously measure the IMU data, and send the IMU data to the AR module 721. After obtaining the IMU data, the AR module 721 may identify the AR status of the electronic device 100 based on the IMU data. When the AR status is the in-vehicle state, the AR module 721 may start the geo-fence detection module 722 to work. The geo-fence detection module 722 may detect whether the electronic device 100 enters the geo-fence of the garage. In this way, the geo-fence detection module 722 may be started to work only when the AR module 721 identifies that the electronic device 100 is in the in-vehicle state, so that power consumption of the electronic device 100 is reduced.

In some embodiments, after the user authorizes the electronic device 100 to record and use positioning behavior data of the user in the electronic device 100, the electronic device 100 may record the positioning behavior data in a daily activity of the user. The positioning data may include one or more of the following items: a location that the user navigates to, a location that the user searches for, a location visit frequency, a location search frequency, and the like. The electronic device 100 may determine, based on the positioning data, one or more hotspot activity regions in which the electronic device 100 frequently visits, and generate geo-fence data of a garage in the one or more hotspot activity regions. The electronic device 100 may store the geo-fence data of the garage into the geo-fence database by classification based on a city in which the electronic device 100 is located and a hotspot activity region.

A data storage structure in the geo-fence database may be shown in Table 1.

**Table 1**

| City | Hotspot activity region | Geo-fence data |
|---|---|---|
| City A | Hotspot activity region 1 | Geo-fence data 1 |
| | | Geo-fence data 2 |
| | | Geo-fence data 3 |
| | Hotspot activity region 2 | Geo-fence data 4 |
| | | Geo-fence data 5 |
| | | Geo-fence data 6 |
| | Hotspot activity region 3 | Geo-fence data 7 |
| | | Geo-fence data 8 |
| | | Geo-fence data 9 |
| City B | Hotspot activity region 4 | Geo-fence data 10 |
| | | Geo-fence data 11 |
| | Hotspot activity region 5 | Geo-fence data 12 |
| | | Geo-fence data 13 |
| ... | ... | ... |

As shown in Table 1, the city A may include a hotspot activity region 1, a hotspot activity region 2, and a hotspot activity region 3. The hotspot activity region 1 may have three pieces of geo-fence data: geo-fence data 1, geo-fence data 2, and geo-fence data 3. The hotspot activity region 2 may have three pieces of geo-fence data: geo-fence data 4, geo-fence data 5, and geo-fence data 6. The hotspot activity region 3 may have three pieces of geo-fence data: geo-fence data 7, geo-fence data 8, and geo-fence data 9. The city A may include a hotspot activity region 4 and a hotspot activity region 5. The hotspot activity region 4 may have two pieces of geo-fence data: geo-fence data 10 and geo-fence data 11. The hotspot activity region 5 may have two pieces of geo-fence data: geo-fence data 12 and geo-fence data 13. Table 1 is merely used to explain this application and shall not be construed as a limitation.

In some embodiments, before the electronic device 100 enters the geo-fence, the GNSS module 734 may be in an off state, and the geo-fence detection module 722 may determine, based on the cellular cell information and/or the Wi-Fi data, whether the electronic device 100 enters the geo-fence of the garage. When the geo-fence detection module 722 determines, based on the cellular cell information and/or the Wi-Fi data, that the electronic device 100 enters the geo-fence of the garage, and the electronic device 100 is in the in-vehicle state, the processor 710 starts the GNSS module 734, and obtains GNSS data through the GNSS module 734. The GNSS data includes GNSS measurement information, or the GNSS data includes GNSS measurement information and a GNSS location.

In this way, when the user does not start the GNSS module on the electronic device 100 in advance, the in-vehicle state and a geo-fence entry/exit result of the electronic device 100 can be identified. When it is identified that the electronic device 100 is in the in-vehicle state and enters the geo-fence of the garage, the GNSS module is automatically started, and navigation and positioning is continuously performed based on the GNSS data obtained by the GNSS module and the IMU data obtained by the IMU, to obtain a real-time location of the electronic device 100 in the garage.

In some embodiments, the navigation and positioning module 713 may further include a dead reckoning (dead reckoning, DR) positioning module. The DR positioning module may be used in inertial navigation of the user in a riding process. Therefore, when it is detected that the AR status of the electronic device 100 is the riding state and the electronic device 100 enters a geo-fence, the electronic device 100 may invoke the DR positioning module and the GNSS positioning module in the navigation and positioning module to perform continuous positioning. When parking is detected, the electronic device 100 may record and output a parking location.

The following describes a positioning method according to an embodiment of this application.

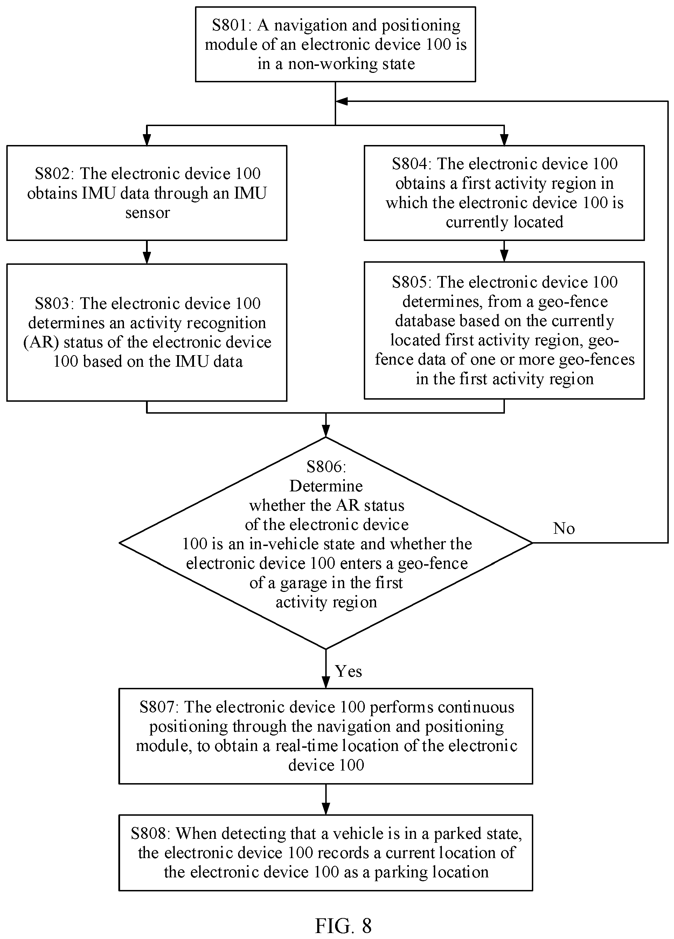

FIG. 8 is an example of a schematic flowchart of a positioning method according to an embodiment of this application.

As shown in FIG. 8, the method may include the following steps.

S801: A navigation and positioning module of an electronic device 100 is in a non-working state.

The navigation and positioning module may include a VDR module and a GNSS positioning module. When the electronic device 100 is in a non-working state, the VDR module and the GNSS positioning module do not work, and the electronic device 100 cannot obtain high-precision location information and cannot perform navigation.

S802: The electronic device 100 obtains IMU data through an IMU sensor.

The IMU sensor may include a gyroscope and an accelerometer. The IMU data may include gyroscope data and/or acceleration data.

S803: The electronic device 100 determines an activity recognition (AR) status of the electronic device 100 based on the IMU data.

The activity recognition (AR) status may include an in-vehicle state, a riding state, a walking state, a static state, and the like.

In an example, the electronic device 100 may determine a moving speed and a moving acceleration of the electronic device 100 from the IMU data. When the moving speed and/or the moving acceleration meet/meets a first preset condition, the electronic device 100 may determine that the electronic device 100 is in the in-vehicle state. The first preset condition includes that the moving speed of the electronic device 100 is between a first preset speed and a second preset speed and/or the moving acceleration of the electronic device is greater than a preset acceleration, where the first preset speed is less than the second preset speed. For example, when the moving speed of the electronic device 100 is greater than 40 kilometers per hour (km/h) and less than 180 km/h, the electronic device 100 may determine that the AR status of the electronic device 100 is the in-vehicle state. For another example, when the moving acceleration of the electronic device 100 is greater than 0.2 g, where g is a standard gravity acceleration, and g=9.8 m/s². For another example, when the moving speed of the electronic device 100 is greater than 40 km/h and less than 180 km/h, and the moving acceleration of the electronic device 100 is greater than 0.2 g, the electronic device 100 may determine that the AR status of the electronic device 100 is the in-vehicle state. The foregoing example is merely used to explain this application. In specific implementation, the AR status of the electronic device 100 may be alternatively determined based on the IMU data and another condition. This is not limited herein.

In some examples, when the electronic device 100 determines that a Bluetooth module establishes a Bluetooth connection to a vehicle, the electronic device 100 may determine that the AR status of the electronic device 100 is the in-vehicle state. When establishing a Bluetooth connection to another device, the electronic device 100 may learn a device type of the another device. Therefore, when the electronic device 100 establishes the Bluetooth connection to the vehicle, the electronic device 100 may learn that the device type of the vehicle is a vehicle type. When the electronic device 100 determines that the Bluetooth connection between the electronic device 100 and the vehicle is disconnected, the electronic device 100 may determine that the vehicle is in the parked state.

In some examples, the electronic device 100 may establish the Bluetooth connection to the vehicle. When the vehicle is started, the vehicle may send vehicle status information 1 to the electronic device 100 through the Bluetooth connection. The status information 1 indicates that the vehicle is started. When the vehicle is parked and flame-out, the vehicle may send vehicle status information 2 to the electronic device 100 through the Bluetooth connection, where the vehicle status information 2 indicates that the vehicle is parked. When the electronic device 100 receives the vehicle status information 1, the electronic device 100 may determine that the electronic device 100 is in the in-vehicle state. When the electronic device 100 receives the vehicle status information 2, the electronic device 100 may determine that the vehicle is in the parked state.

S804: The electronic device 100 obtains a first activity region in which the electronic device 100 is currently located.

Manner 1: The electronic device 100 may obtain, through a cellular module, a cellular cell in which the electronic device 100 is currently located, and determine, from a plurality of hotspot activity regions based on the cellular cell in which the electronic device 100 is located, the first activity region in which the electronic device 100 is located. There is a correspondence between cellular cell information and a hotspot activity region. For example, one cellular cell may correspond to one hotspot activity region. For another example, a plurality of cellular cells may correspond to one hotspot activity region.

Manner 2: The electronic device 100 may obtain Wi-Fi data through a Wi-Fi module, where the Wi-Fi data may include a MAC address, an IP address, Wi-Fi signal strength, and the like that are of a Wi-Fi access point that sends a Wi-Fi signal. Because locations of Wi-Fi access points are generally fastened, MAC addresses and/or IP addresses of some Wi-Fi access points and locations of these Wi-Fi access points may be stored in an Internet server. After the electronic device 100 obtains a MAC address and/or an IP address of a Wi-Fi signal, the electronic device 100 may query a location region of the Wi-Fi access point from the server based on the MAC address and/or the IP address of the Wi-Fi access point, and determine the location region of the Wi-Fi access point as the first activity region in which the electronic device 100 is currently located.

Manner 3: The electronic device 100 may obtain a GNSS location and measurement information through a GNSS module. Positioning precision of the GNSS location is poor (for example, a positioning range is greater than 10 m), and cannot be used for navigation and positioning of the electronic device 100. After obtaining the GNSS location, the electronic device 100 may determine, from a plurality of hotspot regions based on the GNSS location, the first activity region in which the electronic device 100 is located.

Manner 4: The electronic device 100 may alternatively receive location information pre-input by a user, and the electronic device 100 may determine, from a plurality of hotspot activity regions based on the location information pre-input by the user, the first activity region in which the electronic device 100 is located.

In embodiments of this application, a manner of determining the first activity region in which the electronic device 100 is located is not limited to the foregoing manners. The first activity region of the electronic device 100 may be alternatively determined in another manner. This is not limited herein.

S805: The electronic device 100 determines, from a geo-fence database based on the first activity region in which the user is currently located, geo-fence data of one or more geo-fences in the first activity region.

The geo-fence database may include geo-fence data in a plurality of hotspot activity regions. The geo-fence database is stored locally on the electronic device 100, or may be stored on a cloud server.

S806: The electronic device 100 determines whether the AR status of the electronic device 100 is the in-vehicle state and whether the electronic device 100 enters a geo-fence of a garage in the first activity region.

The electronic device 100 may determine, based on the cellular cell information and/or the Wi-Fi data and/or the GNSS location that are/is detected by the electronic device 100 and the geo-fence data of the one or more geo-fences in the first activity region, whether the electronic device 100 enters the geo-fence of the garage in the first activity region. The geo-fence data may include information such as cellular cell information, Wi-Fi fingerprint library data, and a GNSS location. The cellular cell information may include a cellular cell at a location of the geo-fence. The Wi-Fi fingerprint library data includes identifier information and signal strength information of a Wi-Fi signal detected at the location of the geo-fence.

When the cellular cell information detected by the electronic device 100 is the same as cellular cell information in first geo-fence data of a first garage, and/or the Wi-Fi data detected by the electronic device 100 matches Wi-Fi data in the first geo-fence data, and/or the GNSS location detected by the electronic device 100 matches a GNSS location in the first geo-fence data, the electronic device 100 may determine that the electronic device 100 enters the geo-fence of the garage in the first activity region.

In an example, the GNSS module on the electronic device 100 is in an off state. After the electronic device 100 determines, based on the cellular cell information and/or the Wi-Fi data, that the electronic device 100 enters the geo-fence of the garage and the electronic device 100 is in the in-vehicle state, the electronic device 100 starts the GNSS module to obtain GNSS data. Then, the electronic device 100 continuously performs navigation and positioning based on the GNSS data obtained by the GNSS module and the IMU data, to obtain a real-time location of the electronic device 100. The GNSS data includes GNSS measurement information, or the GNSS data includes GNSS measurement information and a GNSS location.

When the electronic device 100 determines, based on the IMU data, whether the electronic device is in the in-vehicle state, the IMU may be started before whether the electronic device is in the in-vehicle state is determined. When the electronic device 100 determines, in another manner (for example, based on whether the electronic device 100 establishes the Bluetooth connection to the vehicle), whether the electronic device 100 is in the in-vehicle state, the IMU may be started before whether the electronic device is in the in-vehicle state is determined, or may be started only when it is determined that the electronic device 100 enters the geo-fence of the garage and the electronic device 100 is in the in-vehicle state. In this way, power consumption of the electronic device 100 is reduced.

In an example, the electronic device 100 may first identify the AR status of the electronic device 100, and determine whether the AR status of the electronic device 100 is the in-vehicle state. After it is determined that the AR status of the electronic device 100 is the in-vehicle state, whether the electronic device 100 enters the geo-fence of the garage in the first activity region is determined. In this way, whether the electronic device 100 enters the geo-fence of the garage can be detected only when it is identified that the electronic device 100 is in the in-vehicle state, to reduce power consumption of the electronic device 100.

In another example, the electronic device 100 may first determine whether the electronic device 100 enters the geo-fence of the garage in the first activity region. After the electronic device 100 determines that the electronic devices enter the geo-fence of the garage in the first activity region, the electronic device 100 identifies the AR status of the electronic device 100, and determines whether the AR status of the electronic device 100 is the in-vehicle state. In this way, the AR status of the electronic device 100 can be identified and determined only after the electronic device 100 enters the geo-fence of the garage, so that power consumption of the electronic device 100 is reduced.

S807: When the AR status of the electronic device 100 is the in-vehicle state and the electronic device 100 enters the geo-fence in the first activity region, the electronic device 100 may perform continuous positioning through the navigation and positioning module, to obtain the real-time location of the electronic device 100.

The VDR module in the navigation and positioning module may determine displacement information of the electronic device 100 based on the IMU data. The GNSS positioning module may perform high-precision positioning resolving based on the GNSS location and the measurement information that are obtained by the GNSS module, to obtain the high-precision location information. The navigation and positioning module may combine mobile displacement and the high-precision location information, to continuously obtain the real-time location of the electronic device 100. When the navigation and positioning module cannot obtain the GNSS location and the measurement information that are sent by the GNSS module, the navigation and positioning module may obtain high-precision location information obtained by the GNSS positioning module through resolving last time. The VDR positioning module may resolve displacement information of the electronic device 100 in a target time period based on the IMU data, where the target time period is from a moment at which the GNSS positioning module obtains the high-precision location information through resolving last time to a current moment. The navigation and positioning module may determine a location of the electronic device 100 at the current moment based on the high-precision location information obtained through resolving last time and the displacement information of the electronic device 100 in the target time period.

For example, when the electronic device obtains the GNSS data at a first moment through the GNSS module, the electronic device obtains a location of the electronic device at the first moment through resolving based on the GNSS data. When the electronic device does not obtain the GNSS data at a second moment through the GNSS module, the electronic device determines displacement information of the electronic device from the first moment to the second moment based on the IMU data. The electronic device determines a location of the electronic device at the second moment based on the location of the electronic device at the first moment and the displacement information from the first moment to the second moment.

S808: When detecting that the vehicle is in the parked state, the electronic device 100 records a current location of the electronic device 100 as a parking location.

In an example, the electronic device 100 may determine a moving speed of the electronic device 100 from the IMU data. When the moving speed meets a second preset condition, the electronic device 100 may determine that the electronic device 100 is in the parked state. For example, the second preset condition may include that the moving speed of the electronic device 100 is 0.

In an example, when the vehicle is parked and flame-out, the vehicle may send the vehicle status information 2 to the electronic device 100 through the Bluetooth connection, where the vehicle status information 2 indicates that the vehicle is parked. When the electronic device 100 receives the vehicle status information 2, the electronic device 100 may determine that the vehicle is in the parked state.

In an example, when the electronic device 100 detects that the Bluetooth connection between the electronic device 100 and the vehicle is disconnected, the electronic device 100 may detect that the vehicle is in the parked state.

After the electronic device 100 obtains the parking location, the electronic device 100 may output prompt information, where the prompt information is used to prompt the user with the parking location of the vehicle.

In an example, after obtaining the parking location, the electronic device 100 may mark the parking location of the electronic device 100 on a map.

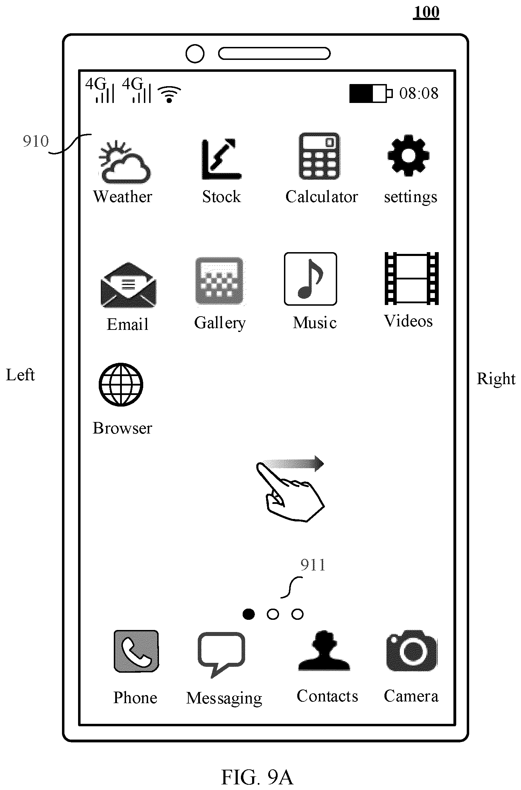

For example, as shown in FIG. 9A, the electronic device 100 may display a leftmost page 910 of all pages on a home screen. The page 910 may include a plurality of application icons (for example, a Weather application icon, a Stock application icon, a Calculator application icon, a Settings application icon, an Email application icon, a Gallery application icon, a Music application icon, a Video application icon, and a Browser application icon). A page indicator 911 is further included below the plurality of application icons. The page indicator 911 indicates a location relationship between the currently displayed page 910 and another page. A plurality of tray icons (for example, a Phone application icon, a Messaging application icon, a Contacts application icon, and a Camera application icon) are provided below the page indicator 911, and the tray icons are always displayed during page switching. The page indicator may alternatively not be a part of the page and exists independently. The tray icons are also optional. This is not limited in embodiments of this application.

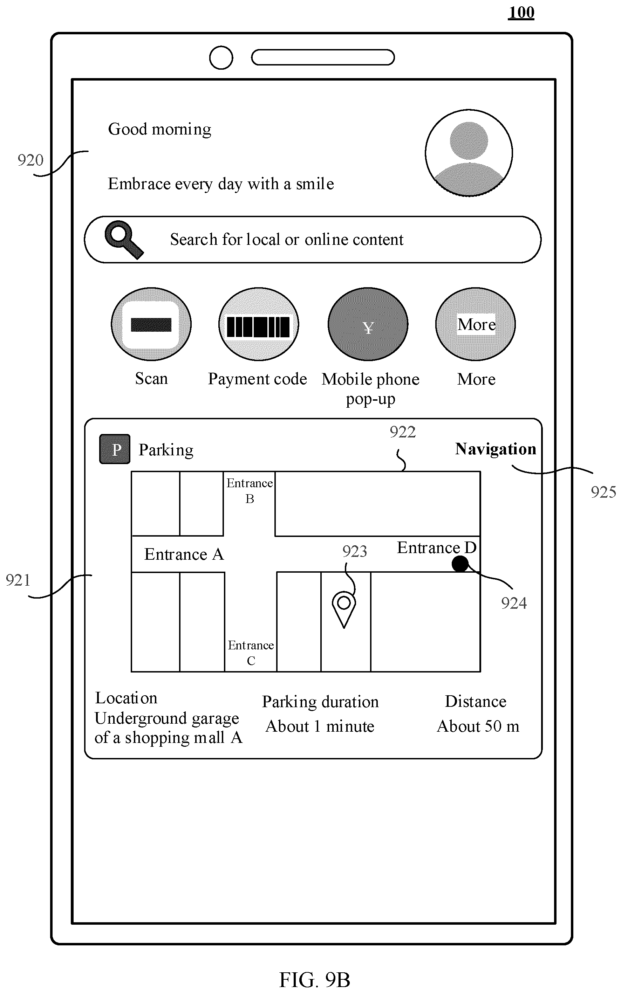

After obtaining the parking location, the electronic device 100 may receive a right-sliding input of the user on the page 910. In response to the input, the electronic device 100 may display a leftmost interface 920 shown in FIG. 9B.

As shown in FIG. 9B, the leftmost interface 920 may include a parking card 921 and one or more shortcut function controls (for example, a search control, a scan function control, a payment code function control, a mobile phone top-up function control, and a more function control). A map 922, a parking location name (for example, an underground parking lot of a shopping mall A), parking duration (for example, about 1 minute), a distance (for example, within 50 meters) between the parking location and a current location, and the like may be displayed on the parking card 921. A mark 923 corresponding to the parking location of the vehicle and a mark 924 corresponding to the current location of the electronic device 100 may be displayed on the map 922. Optionally, a navigation control 925 may be further displayed on the parking card 921, and the navigation control 925 may be used to trigger the electronic device 100 to display a route guide from the current location to the parking location.

The foregoing example is merely used to explain this application. In addition to the leftmost interface, the electronic device 100 may display the parking location on another interface, for example, an interface of a Vehicle application. Details are not described herein again.

In some embodiments, the navigation and positioning module may further include a dead reckoning (DR) positioning module. The DR positioning module may be used in inertial navigation of the user in a riding process. Therefore, when it is detected that the AR status of the electronic device 100 is the riding state and the electronic device 100 enters a geo-fence, the electronic device 100 may invoke the DR positioning module and the GNSS positioning module in the navigation and positioning module to perform continuous positioning. When parking is detected, the electronic device 100 may record and output the parking location.

An embodiment of this application provides a positioning method, to configure a geo-fence for a plurality of indoor regions (for example, a garage, a tunnel, or a cave). When a navigation and positioning module on an electronic device is not started, if the electronic device detects that the electronic device enters a geo-fence of a specified indoor region and the electronic device is in an in-vehicle state, the electronic device may start the navigation and positioning module, and initiate continuous positioning. When parking is detected, the electronic device obtains a parking location. The navigation and positioning module includes a GNSS positioning module and a VDR positioning module/DR positioning module. In this way, the electronic device can automatically start the navigation and positioning module when identifying that the electronic device is to enter an indoor region, to obtain a real-time location of the electronic device entering the indoor region.

In conclusion, the foregoing embodiments are merely intended for describing the technical solutions of this application, but not for limiting this application. Although this application is described in detail with reference to the foregoing embodiments, persons of ordinary skill in the art should understand that they may still make modifications to the technical solutions described in the foregoing embodiments or make equivalent replacements to some technical features thereof, without departing from the scope of the technical solutions of embodiments of this application.

## Claims

1. A positioning method, applied to an electronic device, wherein the electronic device comprises an inertial measurement unit IMU and a global navigation satellite system GNSS module, the IMU is configured to detect IMU data of the electronic device, and the GNSS module is configured to obtain GNSS data when the GNSS module is started; and the method comprises:
the GNSS module is in an off state;
when the electronic device detects that the electronic device is in an in-vehicle state and the electronic device enters a geo-fence of a garage, starting, by the electronic device, the GNSS module, and obtaining the GNSS data through the GNSS module;
determining, by the electronic device, a real-time location of the electronic device based on the GNSS data and the IMU data;
when the electronic device detects that a vehicle is parked, determining, by the electronic device as a parking location, a first location determined based on the GNSS data and the IMU data; and
displaying, by the electronic device, the parking location.

2. The method according to claim 1, wherein that the electronic device detects that the electronic device is in an in-vehicle state specifically comprises:
if the electronic device detects that the IMU data meets a first preset condition, determining, by the electronic device, that the electronic device is in the in-vehicle state.

3. The method according to claim 1, wherein that the electronic device detects that the electronic device is in an in-vehicle state specifically comprises:
if the electronic device detects that a Bluetooth connection to the vehicle is established, determining, by the electronic device, that the electronic device is in the in-vehicle state.

4. The method according to claim 2, wherein that the electronic device detects that a vehicle is parked specifically comprises:
if the electronic device detects that the IMU data meets a second preset condition, determining, by the electronic device, that the vehicle is parked.

5. The method according to claim 3, wherein that the electronic device detects that a vehicle is parked specifically comprises:
if the electronic device detects that the Bluetooth connection to the vehicle is disconnected, determining, by the electronic device, that the vehicle is parked.

6. The method according to any one of claims 1 to 5, wherein that the electronic device detects that the electronic device enters a geo-fence of a garage specifically comprises:
if the electronic device detects that cellular cell information of the location of the electronic device matches cellular cell information in geo-fence data of the garage, and/or the electronic device detects that Wi-Fi data of the location of the electronic device matches Wi-Fi data in the geo-fence data of the garage, determining, by the electronic device, that the electronic device enters the geo-fence of the garage, wherein the Wi-Fi data comprises one or more of the following: a MAC address, an IP address, and Wi-Fi signal strength that are of a Wi-Fi access point that sends a Wi-Fi signal.

7. The method according to claim 2, wherein the first preset condition comprises that a moving speed of the electronic device is between a first preset speed and a second preset speed and/or a moving acceleration of the electronic device is greater than a preset acceleration, wherein the first preset speed is less than the second preset speed.

8. The method according to claim 4, wherein the second preset condition comprises that a moving speed of the electronic device is 0.

9. The method according to claim 6, wherein before the electronic device detects that the electronic device enters the geo-fence of the garage, the method further comprises:
determining, by the electronic device from a geo-fence database based on the cellular cell information and/or Wi-Fi data detected by the electronic device, one or more pieces of geo-fence data in a target activity region in which the electronic device is located; and
determining, by the electronic device based on the one or more pieces of geo-fence data in the target activity region and the cellular cell information and/or Wi-Fi data detected by the electronic device, whether the electronic device enters the geo-fence of the garage.

10. The method according to any one of claims 1 to 9, wherein the determining, by the electronic device, a real-time location of the electronic device based on the GNSS data and the IMU data specifically comprises:
when the electronic device obtains the GNSS data at a first moment through the GNSS module, obtaining, by the electronic device, a location of the electronic device at the first moment through resolving based on the GNSS data;
when the electronic device does not obtain the GNSS data at a second moment through the GNSS module, determining, by the electronic device, displacement information of the electronic device from the first moment to the second moment based on the IMU data; and
determining, by the electronic device, a location of the electronic device at the second moment based on the location of the electronic device at the first moment and the displacement information from the first moment to the second moment.

11. An electronic device, comprising an IMU, a GNSS module, a processor, and a display, wherein
the IMU is configured to: detect IMU data of the electronic device, wherein the IMU data comprises gyroscope data and acceleration data; and send the IMU data to the processor;
the GNSS module is in an off state;
the processor is configured to start the GNSS module when it is detected that the electronic device is in an in-vehicle state and the electronic device enters a geo-fence of a garage;
the GNSS module is configured to: obtain the GNSS data when the GNSS module is started, and send the GNSS data to the processor;
the processor is configured to determine a real-time location of the electronic device based on the GNSS data and the IMU data;
the processor is further configured to: when parking is detected, determine, as a parking location, a first location determined based on the GNSS data and the IMU; and
the processor is further configured to indicate the display to display the parking location.

12. The electronic device according to claim 11, wherein if the IMU data meets a first preset condition, the electronic device is in the in-vehicle state.

13. The electronic device according to claim 12, wherein the electronic device further comprises a sensor hub sensor hub module, wherein
the sensor hub module is configured to: obtain the IMU data from the IMU, and when the IMU data meets the first preset condition, determine that the electronic device is in the in-vehicle state; and
the sensor hub module is further configured to notify the processor that the electronic device is in the in-vehicle state.

14. The electronic device according to claim 11, wherein the processor is further configured to: when it is detected that a Bluetooth connection to the vehicle is established, determine that the electronic device is in the in-vehicle state.

15. The electronic device according to claim 11 or 12, wherein if the IMU data meets a second preset condition, the electronic device determines that the vehicle is parked.

16. The electronic device according to claim 15, wherein the electronic device further comprises a sensor hub module, wherein
the sensor hub module is configured to: obtain the IMU data from the IMU, and when the IMU data meets the second preset condition, determine that the vehicle is parked; and
the sensor hub module is further configured to notify the processor that the vehicle is parked.

17. The electronic device according to claim 14, wherein the processor is further configured to: when it is detected that the Bluetooth connection to the vehicle is disconnected, determine, by the electronic device, that the vehicle is parked.

18. The electronic device according to any one of claims 11 to 17, wherein the electronic device further comprises a cellular module and/or a Wi-Fi module, the cellular module is configured to detect cellular cell information of the location of the electronic device, and the Wi-Fi module is configured to detect Wi-Fi data of the location of the electronic device; and
if the cellular module detects that the cellular cell information of the location of the electronic device matches cellular cell information in geo-fence data of the garage, and/or the Wi-Fi module detects that the Wi-Fi data of the location of the electronic device matches Wi-Fi data in the geo-fence data of the garage, the electronic device enters the geo-fence of the garage, wherein the Wi-Fi data comprises one or more of the following: a MAC address, an IP address, and Wi-Fi signal strength that are of a Wi-Fi access point that sends a Wi-Fi signal.

19. The electronic device according to claim 18, wherein the electronic device further comprises the sensor hub module;
the cellular module is further configured to send the cellular cell information of the location of the electronic device to the sensor hub module;
the Wi-Fi module is further configured to send the Wi-Fi data of the location of the electronic device to the sensor hub module;
the sensor hub module is further configured to determine, based on the cellular cell information of the location of the electronic device and/or the Wi-Fi data of the Wi-Fi module, whether the electronic device enters the geo-fence of the garage; and
the sensor hub module is further configured to notify the processor whether the electronic device enters the geo-fence of the garage.

20. The electronic device according to claim 19, wherein the processor is further configured to determine, from a geo-fence database based on the cellular cell information and/or Wi-Fi data detected by the electronic device, one or more pieces of geo-fence data in a target activity region in which the electronic device is located;
the processor is further configured to send the one or more pieces of geo-fence data in the target activity region in which the electronic device is located to the sensor hub module; and
the sensor hub module is specifically configured to determine, based on the one or more pieces of geo-fence data in the target activity region and the cellular cell information and/or Wi-Fi data detected by the electronic device, whether the electronic device enters the geo-fence of the garage.

21. The electronic device according to claim 12 or 13, wherein the first preset condition comprises that a moving speed of the electronic device is between a first preset speed and a second preset speed and/or a moving acceleration of the electronic device is greater than a preset acceleration, wherein the first preset speed is less than the second preset speed.

22. The electronic device according to claim 15 or 16, wherein the second preset condition comprises that a moving speed of the electronic device is 0.

23. The electronic device according to any one of claims 11 to 22, wherein the determining a real-time location of the electronic device based on the GNSS data and the IMU data specifically comprises:
when the GNSS data sent by the GNSS module is obtained at a first moment, obtaining a location of the electronic device at the first moment through resolving based on the GNSS data;
when the GNSS data sent by the GNSS module is not obtained at a second moment, determining displacement information of the electronic device from the first moment to the second moment based on the IMU data; and
determining a location of the electronic device at the second moment based on the location of the electronic device at the first moment and the displacement information from the first moment to the second moment.

24. A computer storage medium, wherein the computer storage medium stores computer instructions, and when the computer instructions are executed by a processor, the method according to any one of claims 1 to 10 is implemented.
